# EUROPÄISCHE PATENTSCHRIFT

(11) **EP 3 424 779 B1**
(45) Veröffentlichungstag und Bekanntmachung des Hinweises auf die Patenterteilung: **03.11.2021**
(21) Anmeldenummer: 18176218.8
(22) Anmeldetag: 06.06.2018
(51) Int. Cl.: B60Q 1/14, H05B 33/08, F21S 41/153, H05B 45/10, H05B 45/44, H05B 47/125

(54) **VERFAHREN ZUM MELDEN EINER VON GEGENVERKEHR AUSGEHENDEN BLENDUNG UND EINE KRAFTFAHRZEUGBELEUCHTUNGSEINRICHTUNG ZUM AUSFÜHREN EINES SOLCHEN VERFAHRENS**
METHOD FOR ANNOUNCING GLARE FROM OPPOSITE DRIVING SIDE AND A MOTOR VEHICLE LIGHTING DEVICE FOR CARRYING OUT SUCH A METHOD
PROCÉDÉ DE SIGNALEMENT D'UN ÉBLOUISSEMENT À PARTIR DES VÉHICULES VENANT EN SENS INVERSE ET UN DISPOSITIF D'ÉCLAIRAGE DE VÉHICULE AUTOMOBILE DESTINÉ À LA MISE EN OEUVRE D'UN TEL PROCÉDÉ

(30) Priorität: 05.07.2017 AT 505582017
(43) Veröffentlichungstag der Anmeldung: 09.01.2019
(73) Patentinhaber: ZKW Group GmbH, 3250 Wieselburg (AT)
(72) Erfinder: Hartmann, Peter, 3392 Schönbühel-Aggsbach (AT); Reinprecht, Markus, 3384 Pielachhäuser (AT); Pürstinger, Josef, 4540 Bad Hall (AT); Reisinger, Bettina, 3300 Amstetten (AT); Hauer, Clemens, 3261 Steinakirchen am Forst (AT); Mayer, Matthias, 3240 Mank (AT); Kalousek, Christian, 3052 Neustift-Innermanzing (AT); Lahmer, Martin, 3662 Münichreith (AT)
(74) Vertreter: Patentanwaltskanzlei Matschnig & Forsthuber OG

(56) Entgegenhaltungen:
- EP-A1- 1 780 462
- EP-A1- 2 026 097
- EP-A1- 3 135 536
- EP-A2- 1 908 631
- DE-A1-102008 032 345
- DE-A1-102012 008 833
- DE-A1-102013 201 382
- DE-A1-102015 007 862
- DE-A1-102015 016 375
- US-A1- 2016 343 254
- US-B1- 9 313 862

## Beschreibung

Die Erfindung betrifft ein von einem Steuergerät, insbesondere einem Kraftfahrzeugsteuergerät, ausführbares Verfahren zum Steuern einer Kraftfahrzeugbeleuchtungseinrichtung, welche zumindest einen Kraftfahrzeugscheinwerfer, und zumindest ein Sensorsystem umfasst, wobei der zumindest eine Kraftfahrzeugscheinwerfer dazu eingerichtet ist, eine vorgegebene erste Gesamtlichtverteilung zu erzeugen, welche zumindest eine erste vorgegebene, aus einer Vielzahl an Lichtpixel gebildete Teil-Lichtverteilung umfasst, wobei die Lichtstärke eines jeden Lichtpixels einzeln mittels des Steuergeräts steuerbar ist. Das heißt, die Lichtstärke eines einzelnen Lichtpixels kann unabhängig von der Lichtstärke der anderen Lichtpixel durch das Steuergerät geändert werden, wodurch die einzelnen Lichtpixel gedimmt und aufgehellt oder ausgeblendet und dann wieder eingeblendet werden können. Das zumindest eine Sensorsystem ist dazu eingerichtet, zumindest entgegenkommende Kraftfahrzeuge zu erfassen, welches Verfahren folgende Schritte aufweist:
Schritt 0: Steuern des zumindest einen Kraftfahrzeugscheinwerfers, um die erste vorgegebene Gesamtlichtverteilung zu erzeugen;
Schritt 1: Steuern des Sensorsystems, um die entgegenkommenden Kraftfahrzeuge zu erfassen;
Schritt 2: Steuern des zumindest einen Kraftfahrzeugscheinwerfers, um (einen oder mehrere) Ausblendbereiche in der ersten Teil-Lichtverteilung auszubilden, was heißt, dass die Ausblendbereiche aus gedimmten, beziehungsweise ausgeblendeten Lichtpixel gebildet werden. Darüber hinaus umfassen die Ausblendbereiche die entgegenkommenden Kraftfahrzeuge. Ferner können Ausblendbereiche überlappen. In anderen Worten bedeutet das, dass jedes entgegenkommende Kraftfahrzeug in einem diesem Kraftfahrzeug zugeordneten Ausblendbereich (zumindest teilweise) enthalten ist;
Schritt 3: Zuordnen einem jeden Ausblendbereich jeweils eines entgegenkommenden Kraftfahrzeugs. Dieses Verfahren wird in der vorliegenden Anmeldung ab und zu zur besseren Verständlichkeit als Sende-Verfahren bezeichnet.

Dabei werden unter dem Begriff "entgegenkommende Kraftfahrzeuge" auch jene Kraftfahrzeuge verstanden, die beispielsweise an einem Straßenrand stehen, und insbesondere an einem aus Sicht der Kraftfahrzeugbeleuchtungseinrichtung gegenüberliegenden Straßenrand derart stehen, dass ihre Scheinwerfer dem zumindest einen Kraftfahrzeugscheinwerfer der Kraftfahrzeugbeleuchtungseinrichtung zugewandt sind. Die Erfindung ist also nicht auf sich bewegende Kraftfahrzeuge beschränkt.

Des Weiteren betrifft die Erfindung ein von einem Steuergerät, insbesondere einem Kraftfahrzeugsteuergerät, ausführbares Verfahren zum Steuern einer Kraftfahrzeugbeleuchtungseinrichtung, welche zumindest einen Kraftfahrzeugscheinwerfer, und zumindest ein Sensorsystem umfasst, wobei der zumindest eine Kraftfahrzeugscheinwerfer dazu eingerichtet ist, eine vorgegebene zweite Gesamtlichtverteilung zu erzeugen, welche zumindest eine zweite vorgegebene, aus einer Vielzahl an Lichtpixel gebildete Teil-Lichtverteilung umfasst, wobei die Lichtstärke eines jeden Lichtpixels einzeln mittels des Steuergeräts steuerbar ist, und das zumindest eine Sensorsystem dazu eingerichtet ist, zumindest entgegenkommende Kraftfahrzeuge zu erfassen, welches Verfahren folgende Schritte aufweist:
Schritt 00: Steuern des zumindest einen Kraftfahrzeugscheinwerfers, um die zweite vorgegebene Gesamtlichtverteilung zu erzeugen;
Schritt 01: Steuern des Sensorsystems, um die entgegenkommenden Kraftfahrzeuge zu erfassen;
Schritt 02: Steuern des zumindest einen Kraftfahrzeugscheinwerfers, um Ausblendbereiche in der zweiten Teil-Lichtverteilung auszubilden, welche Ausblendbereiche die entgegenkommenden Kraftfahrzeuge zumindest teilweise umfassen;
Schritt 03: Zuordnen einem jeden Ausblendbereich jeweils eines entgegenkommenden Kraftfahrzeugs. Dieses Verfahren wird in der vorliegenden Anmeldung ab und zu zur besseren Verständlichkeit als Empfangen-Verfahren bezeichnet.

Außerdem betrifft die Erfindung ein Computerprogramm umfassend Befehle, die bei der Ausführung des Computerprogramms durch ein Steuergerät eines Kraftfahrzeugs dieses Steuergerät veranlassen, die Schritte eines der oben genannten Verfahren oder beider oben genannter Verfahren auszuführen.

Ferner betrifft die Erfindung ein (von einem Steuergerät eines Kraftfahrzeugs lesbares) Speichermedium für ein Steuergerät eines Kraftfahrzeugs mit zumindest einem oben genannten Computerprogramm.

Des Weiteren betrifft die Erfindung ein Steuergerät eines Kraftfahrzeugs umfassend das vorher genannte Speichermedium.

Darüber hinaus betrifft die Erfindung einen in einem der oben genannten Verfahren oder in beiden oben genannten Verfahren einsetzbaren oder zum Durchführen eines der oben genannten Verfahren oder beider oben genannter Verfahren geeigneten Kraftfahrzeugscheinwerfer.

Weiters betrifft die Erfindung ein Kraftfahrzeug-Kommunikationssystem zum Kommunizieren mit entgegenkommenden Kraftfahrzeugen oder mit einer Infrastruktur-Einrichtung.

Solche Verfahren, Kraftfahrzeugscheinwerfer und Systeme können beispielsweise in einer Verkehrssituation ausgeführt beziehungsweise eingesetzt werden, bei welcher ein Lenker eines Kraftfahrzeugs von einem entgegenkommenden Kraftfahrzeug geblendet wird. Eine solche Verkehrssituation kommt auf unbeleuchteten Landstraßen oder Autobahnen nicht selten vor, wenn der Fahrer des entgegenkommenden Kraftfahrzeugs vergisst das Fernlicht auf Abblendlicht umzuschalten oder auf eine Änderung des Straßenverlaufs nicht schnell genug reagieren kann. Um eine Blendung anderer Verkehrsteilnehmer in beispielsweise solchen Verkehrssituationen zu vermeiden wurden entsprechende Lichtassistenzsysteme entwickelt. Ein Beispiel eines solchen Systems stellt ein sogenanntes "Adaptive-Drive-Beam"-System oder ADB-System dar. Bei einem ADB-System, welches zumindest einen Kraftfahrzeugscheinwerfer, ein Sensorsystem und ein Steuergerät umfasst, ist vorgesehen, dass jeder Kraftfahrzeugscheinwerfer eine aus mehreren Lichtsegmenten oder Lichtpixel bestehende Teil-Fernlichtverteilung erzeugen kann. Das Sensorsystem, das eine oder mehrere Kameras (z.B. Stereokameras) und/oder andere Bewegungssensoren umfassen kann, überwacht beispielsweise (nahe und/oder ferne) Umgebung des Kraftfahrzeugs während der Fahrt und überträgt die Daten an das Steuergerät. Das Steuergerät wertet dabei die, vorzugsweise in Echtzeit (kontinuierlich in der Zeit), übertragenen Daten hinsichtlich mehrerer Parameter aus. Beispielsweise kann das Ergebnis einer solchen Auswertung sein, dass ein entgegenkommendes Kraftfahrzeug erfasst ist und sich dieses entgegenkommende Kraftfahrzeug einem von den Kraftfahrzeugscheinwerfern beleuchteten Bereich nähert. Dabei enthält das Steuergerät üblicherweise auch die Informationen, welche Lichtverteilung von den Kraftfahrzeugscheinwerfern gerade abgestrahlt wird. Normalerweise steuert das Steuergerät die Kraftfahrzeugscheinwerfer gemäß den Typ der abgestrahlten Lichtverteilung bestimmenden Parametern, wie Breite, Höhe, Verlauf der Lichtverteilung, Werte der Lichtstärke in bestimmte, vorzugsweise vom Gesetzgeber (abhängig vom Land oder Region: China, Japan, Europa, Canada, USA) vorgeschriebene, Richtungen, um beispielsweise (ebenfalls vom Gesetzgeber) vorgeschriebene Werte der Beleuchtungsstärke in Zonen, Bereichen und Punkten der Lichtverteilung erreichen zu können. Wird nun ein entgegenkommendes Kraftfahrzeug erfasst und ist der von den Kraftfahrzeugscheinwerfern beleuchtete Bereich eine Fernlichtverteilung, so ist die Gefahr groß, dass der Fahrer des entgegenkommenden Kraftfahrzeugs geblendet wird, sobald sein Kraftfahrzeug in diesen von den Kraftfahrzeugscheinwerfern beleuchteten Bereich hineingelangt. Um die Blendung zu reduzieren oder gar zu vermeiden, kann das Steuergerät des ADB-Systems anhand der Ergebnisse der Auswertung jenen Teil der Teil-Fernlichtverteilung bestimmen, welcher den entgegenkommenden Fahrer (siehe unten zum Thema Blendung) blenden würde, und die segmentierte beziehungsweise pixelartige Teil-Fernlichtverteilung durch das entsprechende Steuern der Kraftfahrzeugscheinwerfer derart anpassen, dass dieser (Blendung erzeugende) Teil der Teil-Fernlichtverteilung gedimmt beziehungsweise ausgeblendet wird. Dabei werden die entsprechenden Lichtsegmente beziehungsweise die entsprechenden Lichtpixel auf ein vorgegebenes Niveau derart gedimmt, dass sie eine reduzierte, vorzugsweise eine Blendungsschwelle nicht überschreitende, Lichtstärke aufweisen. Alternativ können die entsprechenden Lichtsegmente beziehungsweise die entsprechenden Lichtpixel gar ausgeschaltet werden. Es darf an dieser Stelle klargestellt werden, dass Blendung durch Blendlichtquellen erzeugt wird und Blendquellen Blendung erzeugen.

Blendung im Straßenverkehr ist ein seit langem bekanntes wichtiges Problem. Der Begriff "Blendung" ist beispielsweise in DIN EN 12665 *"Licht und Beleuchtung-Grundlegende Begriffe und Kriterien für die Festlegung von Anforderungen an die Beleuchtung"* definiert. Gemäß DIN EN 12665 besteht eine negative Korrelation zwischen einem Sehzustand und einer Leuchtdichteverteilung und/oder Höhe der Kontraste. Das heißt, dass beispielsweise bei zu hohen Kontrasten typischerweise ein unangenehm empfundener Sehzustand entsteht. So können große Leuchtdichteunterschiede oder ungünstige Leuchtdichteverteilungen, welche Leuchtdichteverteilungen großer Kontrastunterschiede aufweisen, im Sichtfeld des Fahrers zu einem unangenehmen Gefühl (psychologische Blendung) oder eine tatsächlich nachweisbaren Verminderung der Seeleistung (physiologische Blendung) führen. Die Blendung kann temporär, beispielsweise Millisekunden bis einige Sekunden andauern. Es sind aber auch schwere Blendungen bekannt, die zu permanenten Schäden des Sehapparats führen können. Zur Quantifizierung der Blendung können verschiedene Größen (Blendungsgrößen) herangezogen werden. Eine Übersicht über die Blendungsgrößen (wie beispielsweise Schleierleuchtdichte) kann beispielsweise einer Veröffentlichung des Instituts für Arbeitsschutz der Deutschen gesetzlichen Unfallversicherung zum Thema *"*Blendung - theoretischer Hintergrund" vom Mai 2010 entnommen werden. Zum Thema Blendung durch Kraftfahrzeugscheinwerfer siehe z.B. *_{"}*Blendungsbewertung von KFZ-Scheinwerfern - Was wird messtechnisch erfasst und was nicht?" von B. Kleinert, LuxJunior 2013, Dörnfeld, 2013.

Die Druckschriften EP 1908 631 A2 und EP 3 135 536 A1 offenbaren Kraftfahrzeugscheinwerfer und Verfahren zur Steuerung dieser Scheinwerfer.

Beispiele der oben genannten Kraftfahrzeugscheinwerfer sind aus dem Stand der Technik bekannt und werden oft ADB-Kraftfahrzeugscheinwerfer genannt. Das Erzeugen von Lichtpixel in den ADB-Kraftfahrzeugscheinwerfern kann auf unterschiedliche Art und Weise erfolgen. Beispielsweise kann ein ADB-Kraftfahrzeugscheinwerfer mehrere LED-Lichtquellen umfassen, die von einem oder mehreren Mikrocontroller(n) gesteuert werden können, der/die seinerseits/ihrerseits Befehle, beispielsweise direkt, von dem Steuergerät erhalten. Diese LED-Lichtquellen können in Form einer Matrix auf einer (oder mehrere) Platine(n) angeordnet sein. Dabei kann den LED-Lichtquellen eine lichtleitende, beispielsweise aus Silikon hergestellte Vorsatzoptik vorgelagert sein, in die Licht der LED-Lichtquellen eingespeist wird. Diese Vorsatzoptik ist dazu eingerichtet, ein mehrere Lichtpixel aufweisendes Leuchtbild zu schaffen, das als Lichtbild/ Lichtverteilung vor dem Kraftfahrzeugscheinwerfer, beispielsweise mittels einer optischen Abbildungseinrichtung, oft mittels einer Linse beziehungsweise eines Reflektors beziehungsweise eines Linsenbeziehungsweise Reflektorensystems, abgebildet wird. Die Anzahl der Lichtpixel kann dabei der Anzahl der LED-Lichtquellen entsprechen.

Alternativ kann ein ADB-Kraftfahrzeugscheinwerfer als ein laserscannender Kraftfahrzeugscheinwerfer ausgebildet sein, bei welchem das von eine oder mehreren Laserlichtquellen erzeugte Licht zu einem Lichtkonversionsmittel geleitet wird, um auf diesem ein (segmentiertes oder pixelartiges) Leuchtbild zu erzeugen, welches wiederum als Lichtbild vor den Kraftfahrzeugscheinwerfer projiziert wird.

Darüber hinaus können die Lichtpixel beziehungsweise Lichtsegmente mit Hilfe eines beleuchteten Mikrospiegelaktors erzeugt werden, welcher mit Licht beispielsweise einer oder mehreren LED- oder Laserlichtquelle(n) direkt oder indirekt bestrahlt wird. Als Mikrospiegelaktoren können beispielsweise gesteuerte DLP-Spiegel dienen, die im Übrigen auch bei den laserscannenden Kraftfahrzeugscheinwerfern verwendet werden können. Es versteht sich, dass hier beschriebene Kraftfahrzeugscheinwerfer auch andere optisch relevante Bauelemente/Bauteile, wie weitere Spiegel, Prismen, Reflektoren, lichtleitende Vorsatzoptiken, Projektionslinsen, optische Strukturen, die beispielsweise an den Vorsatzoptiken beziehungsweise Projektionslinse angeordnet sein können, usw. aufweisen. Sofern explizit nicht anders angegeben, bleiben diese Elemente im Rahmen dieser Erfindung unbeeinflusst, weshalb auf sie nicht näher eingegangen wird. Alle ADB-Kraftfahrzeugscheinwerfer haben eins gemein: sie können zumindest eine segmentierte oder pixelartige Lichtverteilung erzeugen, wobei Teile dieser segmentierten oder pixelartigen Lichtverteilung je nach Verkehrssituation (dynamisch oder statisch) ausgeblendet werden können. Auf diese Weise können die ADB-Kraftfahrzeugscheinwerfer zum Erzeugen blendfreier Lichtverteilungen verwendet werden, bei denen beispielsweise entgegenkommende Kraftfahrzeuge ausgeblendet werden.

Steuergeräte sind im modernen KFZ-Bau wesentliche Architekturelemente und übernehmen eine Vielzahl (sehr oft Hunderte) von Funktionen, wie beispielsweise Sensorauswertung, Algorithmenberechnung, Ansteuerung von Aktoren, Diagnose und so weiter. Nahezu jedes Steuergerät umfasst ein oder mehrere Mikrocontroller. Ein solcher Mikrocontroller ist neben einem oder mehreren Mikroprozessor(en) mit separaten Speichern (RAM und/oder ROM), Controllern (für Buskommunikation, Ansteuerung der peripheren Funktionen, A/D- und D/A-Wandler, Pulsweitenmodulation (PWM) usw.) etc. ausgestattet, welche sich beispielsweise auf einem und demselben Siliziumchip befinden können. Der Programmspeicher (ROM) kann hierbei beispielsweise als (beispielsweise entnehmbarer) Flashspeicher ausgeführt sein. Damit kann der Speicherinhalt auf einfacher Weise gelöscht und wiederbeschrieben werden. Diese Funktionalität erlaubt es, während der Entwicklung wie auch während der Nutzungsdauer eines Kraftfahrzeugs die Funktionen in der Software zu ändern, zu aktualisieren oder ganz auszutauschen (siehe z.B. Kapitel 9, "Handbuch Fahrerassistenzsysteme: Grundlagen, Komponenten und Systeme für aktive Sicherheit und Komfort" von H. Winner, S. Hakuli und G. Wolf (Hrsg.) © Vieweg+Teubner | GWV Fachverlage GmbH, Wiesbaden 2009).

Die oben beschriebenen Systeme und Verfahren sind allerdings nicht fehlerfrei. So kann beispielsweise durch eine nicht exakte Einstellung der Kraftfahrzeugscheinwerfer eines ADB-Kraftfahrzeugsystems zu einer Blendung der Fahrer der entgegenkommenden Kraftfahrzeuge kommen. An dieser Stelle sei betont, dass das ADB-Kraftfahrzeugsystem hier nur beispielhaft genannt ist. Genauso gut findet die vorliegende Erfindung auch auf dynamisch einstellbare Kraftfahrzeugscheinwerfer-Systeme, wie beispielsweise Leuchtweitenregulierungssysteme, Kurvenlichtsysteme und so weiter und so fort.

Die Aufgabe der vorliegenden Erfindung ist die oben genannten Nachteile des Standes der Technik zu beseitigen. Diese Aufgabe wird mit einem Verfahren der oben genannten Art (Sende-Verfahren) erfindungsgemäß dadurch gelöst, dass das Verfahren folgende zusätzliche Schritte aufweist:
Schritt 4: Auswählen eines Ausblendbereichs;
Schritt 5: Steuern des Sensorsystems, um diesen Ausblendbereich nach Blendlichtquellen abzutasten;
Schritt 6: Zuordnen der erfassten Blendlichtquelle(n) diesem Ausblendbereich;
Schritt 7: Analysieren der erfassten Blendlichtquelle(n) hinsichtlich relevanter Parameter, um die relevanten Parameter zu ermitteln. Als solche relevante Parameter können beispielsweise einschlägige photometrische Größen, wie Beleuchtungs- und/oder Lichtstärke, Entfernung, dreidimensionale Position der Blendlichtquelle(n) bezüglich des Sensorsystems, d.h. im sensorsystembezogenen Koordinatensystem, sowie Trajektorie(n) der Blendlichtquelle(n) in diesem sensorsystembezogenen Koordinatensystem fungieren;
Schritt 8: Kodieren der relevanten Parameter der Blendlichtquelle(n). Dabei werden die relevanten Parameter beispielsweise in dem Steuergerät in eine (oder mehreren) Symbolfolge(n) umgewandelt, wobei die Symbole dergestalt sind, dass sie auf der physischen Ebene übertragbar sind, beispielsweise in Form einer physischen Größe dargestellt werden können. Konkret kann das Kodieren beispielsweise im Sinne eines Leitungscodes erfolgen. Dabei können die relevanten Parameter in eine Binärfolge umgewandelt werden. Die Binärfolge kann anschließend auf Pegelfolgen umgesetzt werden. Zum Beispiel wird mit NRZ (eng. "non return to zero") eine einfache Zuordnung von logischen Werten ("0" und "1") auf zwei Pegel bezeichnet. Bei NRZ-I werden ebenfalls nur zwei Pegel benutzt, die logische 1 wird jedoch einem Pegelwechsel zugeordnet, während eine logische "0" den Pegel konstant hält. Die Pegelfolgen können als Folgen von Spannungs- beziehungsweise Stromwerten ausgebildet sein, welche vom Steuergerät zum Steuern der Kraftfahrzeugscheinwerfer verwendet werden, um diese wiederum in eine Folge von beispielsweise Lichtintensitäten oder Lichtstärken der Lichtpixel umzusetzen. Dabei kann das Licht einer vorgegebenen (beispielsweise für Menschen unsichtbaren) Wellenlänge gewählt werden. Auf diese Weise können die relevanten Parameter in die optischen Signale kodiert werden. Denkbar ist auch andere physische Größen, beispielsweise Zeit, zu verwenden. Dabei können die relevanten, die Blendlichtquelle(n) charakterisierenden Parameter beispielsweise als eine Abfolge von Lichtpulsen unterschiedlicher Dauer umgesetzt werden. So kann beispielsweise ein Lichtpuls einer ersten Dauer, der beispielsweise durch Einblenden eines ausgeblendeten Lichtpixels für eine vorgegebene Zeit ausgebildet sein, eine logische Null und ein Lichtpuls einer zweiten Dauer eine logische Eins darstellen. Um die Fahrer der entgegenkommenden Kraftfahrzeuge zumindest nicht zu blenden, können die Lichtintensitäten, Lichtstärken und die Leuchtdauer der Lichtpixel entsprechend gewählt werden;
Schritt 9: Steuern des zumindest einen Kraftfahrzeugscheinwerfers gemäß der Kodierung aus Schritt 8, um die relevanten Parameter in Form zumindest eines optischen Signals zu senden, welches optische Signal die Fahrer der entgegenkommenden Kraftfahrzeuge zumindest nicht blendet - d.h. das optische Signal wird derart ausgesandt beziehungsweise derart ausgebildet, dass es die Fahrer der entgegenkommenden Kraftfahrzeuge zumindest nicht blendet -, vorzugsweise von diesen Fahrern nicht wahrgenommen wird, wobei das optische Signal mittels zumindest eines gedimmten Lichtpixels des Ausblendbereichs erzeugt wird, welchem Ausblendbereich die Blendlichtquelle(n) in Schritt 6 zugeordnet wurde(n). Der Begriff "Dimmen" in Bezug auf Lichtpixel subsummiert auch vollständiges Dimmen, d.h. Ausblenden, der Lichtpixel;
Schritt 10: Auswählen eines nächsten Ausblendbereichs und Wiederholen der Schritte 5 bis 9.

Dabei kann es von Vorteil sein, wenn der Kraftfahrzeugscheinwerfer zumindest einen ersten und einen zweiten Mikrokontroller umfasst, wobei der zweite Mikrocontroller vorzugsweise eine diskrete Transistorschaltung umfasst, und der Kraftfahrzeugscheinwerfer in Schritt 0 und Schritt 2 über den ersten Mikrocontroller gesteuert wird, und in Schritt 9 über den zweiten Mikrocontroller gesteuert wird.

Bei einer bevorzugten Ausführungsform kann vorgesehen sein, dass das optische Signal durch abwechselndes, vorzugsweise periodisches, Dimmen und Aufhellen des zumindest einen gedimmten Lichtpixels erzeugt wird.

Darüber hinaus kann es zweckmäßig sein, wenn das zumindest eine gedimmte Lichtpixel nach dem Aufhellen eine geringere Lichtstärke aufweist als die nicht gedimmten (außerhalb der Ausblendbereiche leuchtende) Lichtpixel.

Hinsichtlich der Menge an Information, welche Information mit einem optischen Signal versendet werden kann, kann es vorteilhaft sein, wenn das optische Signal durch abwechselndes Dimmen und Aufhellen der mehreren gedimmten Lichtpixel, beispielsweise von allen gedimmten Lichtpixeln erzeugt wird, wobei die mehreren gedimmten Lichtpixel in einer Reihe oder matrixartig angeordnet sein können. Dabei kann jede zu verschickende Nachricht durch ein vorgegebenes, für diese Nachricht bestimmtes Leuchtmuster charakterisiert sein. Zu jedem Zeitpunkt kann dadurch ein, beispielsweise für eine vorgegebene Dauer (beispielsweise Millisekunden bis 0,1 bis 10 Sekunden, vorzugsweise 1-2 Sekunden) leuchtendes, Leuchtmuster gebildet werden in den eine vorgegebene Nachricht reinkodiert werden.

Weiters kann es zweckmäßig sein, wenn das optische Signal als ein, vorzugsweise mit einer vorgegebenen Periode, gepulstes Signal ausgebildet ist.

Darüber hinaus kann es vorgesehen sein, dass das optische gepulste Signal zumindest einen, vorzugsweise mehrere, Impulse/Pulse/Lichtpulse umfasst, wobei vorzugsweise jeder Impuls/Puls/Lichtpuls einer logischen Eins oder einer logischen Null entspricht.

Des Weiteren wird die Aufgabe mit einem Verfahren der oben genannten Art (Empfangen-Verfahren) erfindungsgemäß dadurch gelöst, dass das Sensorsystem Signalempfangsmittel umfasst und das Verfahren ferner folgende Schritte aufweist:
Schritt 04: Auswählen eines Ausblendbereichs;
Schritt 05: Steuern der Signalempfangsmittel, um diesen ausgewählten Ausblendbereich nach zumindest einem, von den entgegenkommenden Kraftfahrzeugen gesendeten optischen Signal abzutasten, wobei das zumindest eine optische Signal hinsichtlich einer von dem Kraftfahrzeug ausgehenden Blendung relevante Parameter enthält. Vorzugsweise sind die Signalempfangsmittel derart ausgebildet, dass sie zum Empfangen der optischen Signale der oben genannten Art besonders gut geeignet sind, d.h. an die physische Größe angepasst sind, welche physische Größe zum Übertragen der relevanten Parameter der Blendlichtquelle(n) gewählt wurde. Wenn beispielsweise die Lichtstärke beziehungsweise Lichtintensität als diese physische Größe gewählt wurde, können die Signalempfangsmittel beispielsweise Photozellen und/oder Photowiderstände umfassen, die nur für Licht einer vorgegebenen Wellenlänge (beispielsweise infrarot (IR), insbesondere 450-500 Nanometer) empfindlich sind;
Schritt 06: Extrahieren (im Sinne von Gewinnen) der relevanten Parameter aus dem zumindest einen optischen Signal. Wie oben beschrieben, können die relevanten Parameter beispielsweise einschlägige photometrische Größen, wie Beleuchtungs- und/oder Lichtstärke, Entfernung, dreidimensionale Position der Blendlichtquelle(n) bezüglich des Sensorsystems des entgegenkommenden Kraftfahrzeugs (Sender-Kraftfahrzeugs), sowie Trajektorie(n) der Blendlichtquelle(n) enthalten;
Schritt 07: Auswerten der relevanten Parameter, um Korrekturen zu Einstellungen zu erhalten, mit welchen Einstellungen der zumindest eine Kraftfahrzeugscheinwerfer zum Ausbilden des ausgewählten Ausblendbereichs in Schritt 02 gesteuert wurde. Das Steuergerät des Kraftfahrzeugs (des Empfänger-Kraftfahrzeugs) kann diese Parameter auswerten. Ergebnis dieser Auswertung können beispielsweise Korrekturen zu den existierenden Einstellungen der Kraftfahrzeugscheinwerfer sein, mit denen der Ausblendbereich der zweiten Teil-Lichtverteilung und vorzugsweise die zweite Gesamtlichtverteilung und/oder die zweite Teil-Lichtverteilung erzeugt wurde(n);
Schritt 08: Steuern des zumindest einen Kraftfahrzeugscheinwerfers gemäß den Korrekturen, um den ausgewählten Ausblendbereich zu modifizieren und die Blendung des entgegenkommenden Kraftfahrzeugs (Sender-Kraftfahrzeugs) zu reduzieren, insbesondere zu beseitigen;
Schritt 09: Auswählen eines nächsten Ausblendbereichs und Wiederholen der Schritte 05 bis 08.

Bei einer bevorzugten Ausführungsform kann vorgesehen sein, dass die Signalempfangsmittel in dem zumindest einen Kraftfahrzeugscheinwerfer angeordnet sind und vorzugsweise als Photodioden und/oder Photozellen und/oder Photowiderstände ausgebildet sind.

Darüber hinaus wird die Aufgabe mit einem Kraftfahrzeugscheinwerfer erfindungsgemäß dadurch gelöst, dass der Kraftfahrzeugscheinwerfer dazu eingerichtet ist, eine vorgegebene erste Gesamtlichtverteilung zu erzeugen, wobei die erste Gesamtlichtverteilung zumindest eine erste vorgegebene, aus einer Vielzahl an Lichtpixel gebildete Teil-Lichtverteilung umfasst, und zumindest einen ersten und einen zweiten Mikrocontroller umfasst, wobei mittels des ersten Mikrocontrollers ein erster Teil der Lichtpixel der Teil-Lichtverteilung steuerbar ist, und mittels des zweiten Mikrocontrollers ein zweiter Teil der Lichtpixel der Teil-Lichtverteilung steuerbar ist, wobei vorzugsweise kein Lichtpixel dem ersten und dem zweiten Teil gleichzeitig angehört.

Es kann dabei vorgesehen sein, dass der zweite Mikrocontroller eine diskrete Transistorschaltung umfasst.

Die Aufgabe der Erfindung wird auch mit einem Kraftfahrzeugscheinwerfer erfindungsgemäß dadurch gelöst, dass der Kraftfahrzeugscheinwerfer dazu eingerichtet ist, eine vorgegebene erste Gesamtlichtverteilung zu erzeugen, wobei die erste Gesamtlichtverteilung zumindest eine erste vorgegebene, aus einer Vielzahl an Lichtpixel gebildete Teil-Lichtverteilung umfasst, und Signalempfangsmittel aufweist, mittels welcher Signalempfangsmittel zumindest ein Ausblendbereich, vorzugsweise alle Ausblendbereiche, erfassbar ist, vorzugsweise erfassbar sind, und der Ausblendbereich und, wenn es mehrere Ausblendbereiche gibt, dann jeder Ausblendbereich nach zumindest einem vorgegebenen optischen Signal (hierbei geht es um das(die) bereits oben beschriebene(n) optische(n) Signale) abtastbar ist, wobei die Signalempfangsmittel (möglicherweise über einen zentralen Knoten eines Sensorsystems) an ein Steuergerät zum Signalaustausch anschließbar sind. Hierbei wird unter dem Signalaustausch Folgendes verstanden. Die Signalempfangsmittel wandeln typischerweise das empfangene optische Signal um und schicken es in Form anderer Signale an das Steuergerät oder an einen zentralen Knoten des Sensorsystems weiter, welcher zentrale Knoten diese anderen Signale beispielsweise nach einer Weiterverarbeitung oder ohne eine solche Weiterverarbeitung direkt an das Steuergerät schicken kann. Darüber hinaus können Signalempfangsmittel auch Steuerbefehle von dem Steuergerät direkt oder über einen zentralen Knoten des Steuersystems erhalten.

Es kann auch vorgesehen sein, dass der Kraftfahrzeugscheinwerfer dazu eingerichtet ist, eine vorgegebene erste Gesamtlichtverteilung zu erzeugen, wobei die erste Gesamtlichtverteilung zumindest eine erste vorgegebene, aus einer Vielzahl an Lichtpixel gebildete Teil-Lichtverteilung umfasst, und Signalempfangsmittel aufweist, mittels welcher Signalempfangsmittel zumindest ein Ausblendbereich erfassbar ist und der Ausblendbereich nach zumindest einem vorgegebenen optischen Signal abtastbar ist, wobei die Signalempfangsmittel an ein Steuergerät zum Signalaustausch anschließbar sind und zumindest einen ersten und einen zweiten Mikrocontroller umfasst, wobei mittels des ersten Mikrocontrollers ein erster Teil der Lichtpixel der Teil-Lichtverteilung steuerbar ist, und mittels des zweiten Mikrocontrollers ein zweiter Teil der Lichtpixel der Teil-Lichtverteilung steuerbar ist, wobei vorzugsweise kein Lichtpixel dem ersten und dem zweiten Teil gleichzeitig angehört, wobei der zweite Mikrocontroller vorzugsweise eine diskrete Transistorschaltung umfasst.

Außerdem wird die Aufgabe der Erfindung mit einem Kraftfahrzeug-Kommunikationssystem zum Kommunizieren zumindest mit entgegenkommenden Kraftfahrzeugen oder mit einer Infrastruktur-Einrichtung (beispielsweise einem Verkehrsüberwachungssystem und/oder einem System zur Kontrolle der seitens eines Kraftfahrzeugs abgestrahlten Lichtverteilung usw.) mittels Sendens und Empfangens optischer Signale erfindungsgemäß dadurch gelöst, dass das Kraftfahrzeug-Kommunikationssystem umfasst: ein Steuergerät, zwei Kraftfahrzeugscheinwerfer und ein Sensorsystem, wobei das Steuergerät ein Speichermedium mit zumindest einem Computerprogramm umfasst, welches zumindest eine Computerprogramm Befehle umfasst, die bei der Ausführung des zumindest einen Computerprogramms durch das Steuergerät dieses Steuergerät veranlassen, die Schritte des oben genannten Sende-Verfahrens und/oder des Empfangen-Verfahrens auszuführen, wobei die Kraftfahrzeugscheinwerfer dazu eingerichtet sind, eine vorgegebene Gesamtlichtverteilung zu erzeugen, welche zumindest eine vorgegebene, aus einer Vielzahl an Lichtpixel gebildete Teil-Lichtverteilung umfasst, wobei die Lichtstärke eines jeden Lichtpixels einzeln mittels des Steuergeräts steuerbar ist, wobei das Sensorsystem dazu eingerichtet ist, zumindest entgegenkommende Kraftfahrzeuge zu erfassen, und Signalempfangsmittel umfasst, welche Signalempfangsmittel dazu eingerichtet sind, die von den entgegenkommenden Kraftfahrzeugen oder von der Infrastruktur-Einrichtung gesendeten, optischen, beispielsweise gepulsten, Signale zu empfangen, wobei diese Signale Menschen nicht blenden, und vorzugsweise für Menschen nicht wahrnehmbar sind, und welche Signalempfangsmittel an das Steuergerät, zumindest zum Übertragen der empfangenen optischen Signale, anschließbar sind und vorzugsweise in zumindest einem der beiden Kraftfahrzeugscheinwerfer angeordnet sind.

Die Erfindung samt weiteren Vorteilen ist im Folgenden an Hand beispielhafter Ausführungsformen näher erläutert, die in der Zeichnung veranschaulicht sind. In dieser zeigt
Fig. 1 eine typische Verkehrssituation, bei welcher zumindest ein Fahrer geblendet wird;
Fig. 2 die Verkehrssituation der Figur 1 aus Sicht eines Fahrers eines Kraftfahrzeugs;
Fig. 3 Flussdiagram zum Ausführen der Schritte eines ersten Verfahrens zur Signalisierung einer Blendung;
Fig. 4 Flussdiagram zum Ausführen der Schritte eines zweiten Verfahrens zur Behebung einer Blendung durch Einstellen der Kraftfahrzeugscheinwerfer in Echtzeit;
Fig. 5 die Verkehrssituation der Figur 1 aus Sicht eines Fahrers eines entgegenkommenden Kraftfahrzeugs;
Fig. 6 ein gepulstes optisches Signal, und
Fig. 7 einen Mikrocontroller mit einer diskreten Transistorschaltung.

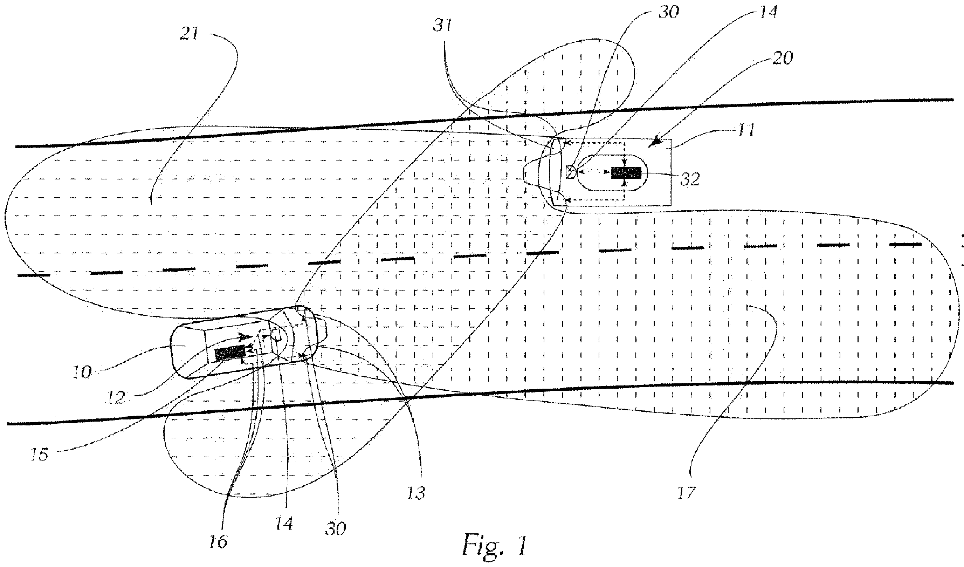

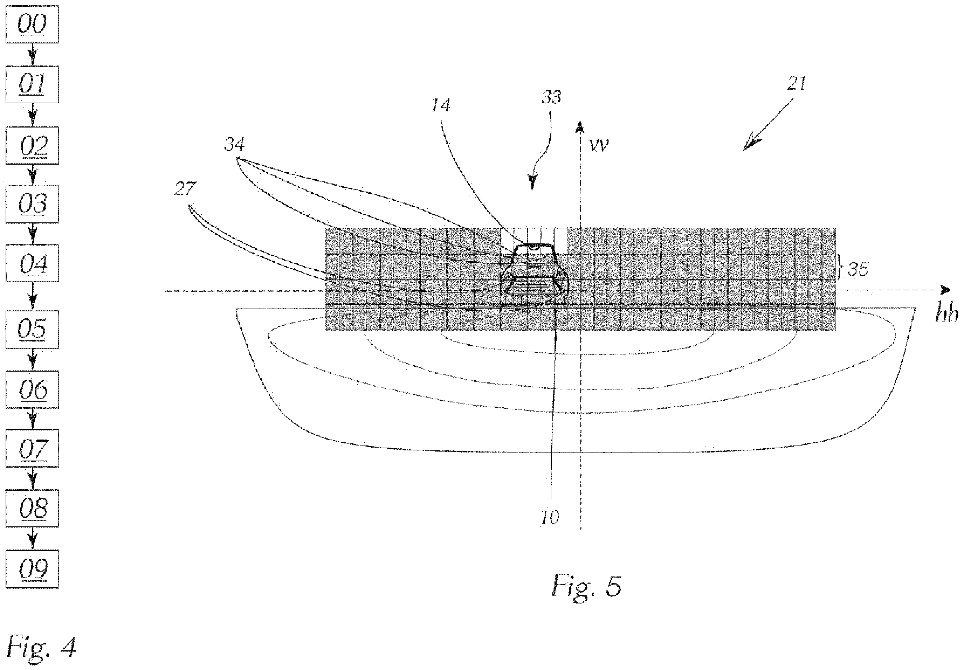

Zunächst wird auf Figur 1 Bezug genommen. Figur 1 zeigt eine typische Verkehrssituation, bei welcher ein Verfahren durchgeführt werden kann, das dem erfindungsgemäßen Verfahren entspricht. Figur 1 zeigt ein Kraftfahrzeug 10 und ein diesem Kraftfahrzeug entgegenkommendes Kraftfahrzeug 11. Im Weiteren und insbesondere in Bezug auf Figuren 4 und 5 wird das Kraftfahrzeug 10 oft als "Sender-Kraftfahrzeug" und das entgegenkommende Kraftfahrzeug als "Empfänger-Kraftfahrzeug" bezeichnet. Es versteht sich, dass diese Bezeichnungen lediglich zum besseren Verständnis dienen und nicht als beschränkend ausgelegt werden sollen.

Das Kraftfahrzeug 10 weist eine Kraftfahrzeugbeleuchtungseinrichtung 12 auf, welche zwei Kraftfahrzeugscheinwerfer 13 und ein Sensorsystem 14 umfasst, welches Sensorsystem 14 (nahe und/oder ferne) Umgebung des Kraftfahrzeugs 10 überwacht. An dieser Stelle sei angemerkt, dass moderne Sensorsysteme in Kraftfahrzeugen mehrere zu verschiedenen Zwecken vorgesehene Sensoren umfassen können. So kann ein modernes Sensorsystem beispielsweise Reifendruck-, Bremsbelagverschleiß-, Fahrermüdigkeit-, Motorölsensoren, eine oder mehrere Kameras und Stereokameras, Radare, Mehrstrahl-Laser, laser-scannende Erfassungssysteme, und konkret, Regensensoren, Einparksensoren und viele andere Sensoren umfassen. Dabei können nicht nur die inneren Kraftfahrzeugkomponenten, wie Motor, Bremsen, Scheinwerfer usw., sondern auch Objekte in der Umgebung des Kraftfahrzeugs und/oder Müdigkeit und Aufmerksamkeitsniveau des Fahrers, in Echtzeit (kontinuierlich) beobachtet und kontrolliert werden. Dabei ist anzumerken, dass die Sensoren eines modernen Sensorsystems in dem Kraftfahrzeug an unterschiedlichen Orten angeordnet werden können, wie beispielsweise Einparksensoren: in einer vorderen und/oder hinteren Stoßstange eines Kraftfahrzeugs. Es versteht sich, dass manche Sensoren auch in Kraftfahrzeugscheinwerfern angeordnet sein können. Das Sensorsystem 14 im Sinne der vorliegenden Erfindung entspricht einem solchen modernen Sensorsystem. Aufgrund des oben Gesagten kann im Zusammenhang mit der vorliegenden Erfindung ein Teil (ein oder mehrere Sensoren) des Sensorsystems 14 in einem oder in beiden Kraftfahrzeugscheinwerfern 13 der Kraftfahrzeugbeleuchtungseinrichtung 12 angeordnet sein.

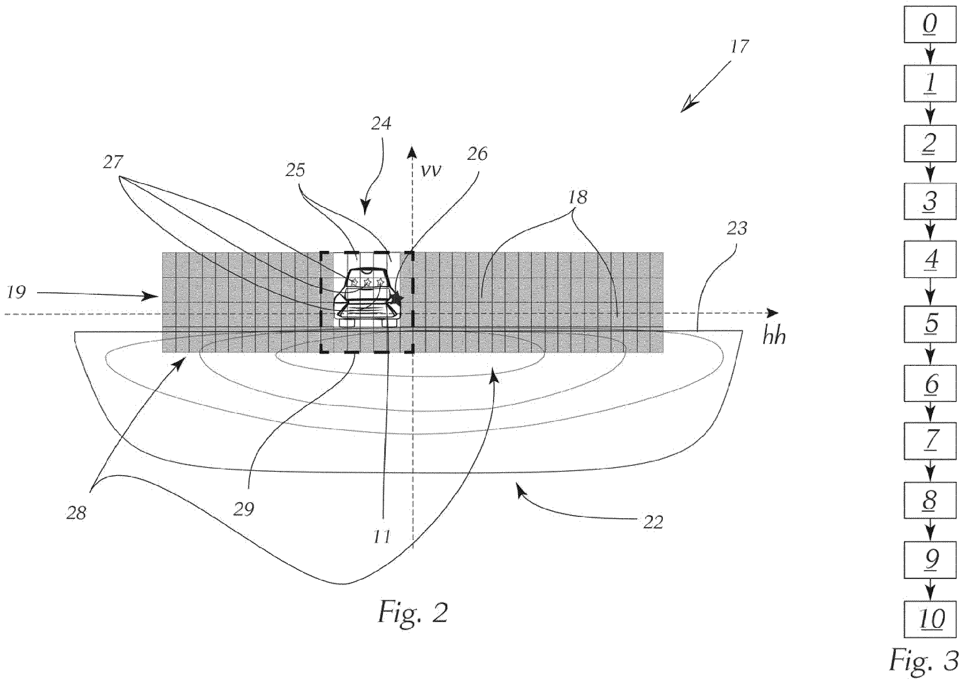

Darüber hinaus umfasst das Kraftfahrzeug 10 ein Steuergerät 15, welches zum Austausch von Daten 16 mit den Kraftfahrzeugscheinwerfern 13 und mit dem Sensorsystem 14 eingerichtet ist und diese ansteuert. Das Steuergerät 15 kann dabei die Kraftfahrzeugscheinwerfer 13 derart ansteuern, dass diese eine erste Gesamtlichtverteilung 17 erzeugen, welche erste Gesamtlichtverteilung 17 zumindest eine erste vorgegebene aus einer Vielzahl an Lichtpixel 18 beziehungsweise Lichtsegmenten gebildete, vorzugsweise blendfreie, Teil-Lichtverteilung 19 umfasst (siehe Figur 2). Die erste Teil-Lichtverteilung 19 wird manchmal auch gepixelte beziehungsweise segmentierte Teil-Lichtverteilung genannt. Darüber hinaus kann das Steuergerät 15 die Lichtstärke eines jeden Lichtpixels 18 steuern. Das Steuergerät 15 kann die Lichtpixel 18 für eine vorgegebene Zeit dimmen, ausblenden, einblenden und aufhellen lassen. Darüber hinaus kann es vorgesehen sein, dass das Steuergerät 15 die Kraftfahrzeugscheinwerfer 13 derart steuert, dass die Lichtpixel aus Licht verschiedener Wellenlängen gebildet werden. Darin sind auch für menschliche Augen nicht wahrnehmbare Wellenlängen, wie beispielsweise Wellenlängen im infraroten (IR) Bereich des Spektrums, inbegriffen. Denkbar ist aber auch, dass die Kraftfahrzeugscheinwerfer 13 wie herkömmliche, oben genannte Kraftfahrzeugscheinwerfer ausgebildet sind und gleiche Bauteile, wie Leuchtmittel, beispielsweise Lichtquellen und/oder Lichtkonversionsmittel, Vorsatzoptiken, und so weiter und so fort, aufweisen. Beispielsweise können die Kraftfahrzeugscheinwerfer 13 als oben beschriebene ADB-Kraftfahrzeugscheinwerfer ausgebildet sein.

Die Begriffe "Lichtpixel" und "Lichtsegment" sind im Rahmen der vorliegenden Erfindung im Wesentlichen gleichbedeutend, wobei ein Lichtpixel typischerweise eine kleinere Größe als ein Lichtsegment aufweist.

Das entgegenkommende Kraftfahrzeug 11 kann ebenfalls eine Kraftfahrzeugbeleuchtungseinrichtung 20 und ein Steuergerät 32 der oben genannten Art aufweisen, welche ebenfalls ein Sensorsystem 14, welches dem modernen Sensorsystem im oben genannten Sinne entspricht, und zwei Kraftfahrzeugscheinwerfer 31, die dazu eingerichtet sind, eine zweite vorgegebene Gesamtlichtverteilung 21 zu erzeugen. Die zweite Gesamtlichtverteilung 21 kann darüber hinaus eine zweite vorgegebene, aus einer Vielzahl an Lichtpixel gebildete Teil-Lichtverteilung umfassen, wobei die Lichtstärke eines jeden Lichtpixels einzeln mittels des Steuergeräts 32 des entgegenkommenden Kraftfahrzeugs 11 steuerbar sein kann. Die Kraftfahrzeugbeleuchtungseinrichtung 20 des entgegenkommenden Kraftfahrzeugs 11 kann der Kraftfahrzeugbeleuchtungseinrichtung 12 des Kraftfahrzeugs 10 identisch sein.

Allerdings erzeugt die Kraftfahrzeugbeleuchtungseinrichtung 20 des entgegenkommenden Kraftfahrzeugs 11, im Gegensatz zu der Kraftfahrzeugbeleuchtungseinrichtung 12 des Kraftfahrzeugs 10, die zweite Gesamtlichtverteilung 21, die, wie der Figur 1 zu entnehmen ist, den Fahrer des Kraftfahrzeugs 10 blendet. Die Blendung kann oft von einer fehlerhaften Einstellung der Kraftfahrzeugscheinwerfer herrühren, welche ihrerseits unterschiedlichen Ursprung haben kann: zu stark beladenes Kraftfahrzeug, zu hell leuchtende Lichtquellen, weil diese beispielsweise durch einen zu hohen Strom betrieben werden oder weil ein Teil von den Lichtquellen kürzlich ausgetauscht wurde und die neuen Lichtquellen neue Beleuchtungscharakteristika aufweisen, Softwarefehler im Steuergerät, falsche Referenz zwischen Sensorsystem und der Kraftfahrzeugbeleuchtungseinrichtung, welche durch Versatz der zugeordneten optischen Achsen verursacht sein kann, usw. Und obgleich die zweite Gesamtlichtverteilung 21 als eine blendfreie Gesamtlichtverteilung ausgebildet sein sollte, kann es trotzdem beispielsweise aus einem oder mehreren der oben genannten Gründe zur Blendung des Fahrers des Kraftfahrzeugs 10 durch das entgegenkommende Kraftfahrzeug 11 kommen. Auf eine Korrektur der Einstellungsfehler wird später genauer eingegangen.

Es versteht sich, dass die in Figur 1 gezeigte Verkehrssituation auch gespiegelt dargestellt werden kann. D.h. es ist durchaus denkbar, dass das Kraftfahrzeug 10 das entgegenkommende Kraftfahrzeug 11 blendet. Darüber hinaus ist es auch denkbar, dass sich die Kraftfahrzeuge 10 und 11 gegenseitig blenden. In dem letzten Fall ist es vorteilhaft beide erfindungsgemäße Verfahren, deren Ausführungsformen weiter unten gezeigt sind, anzuwenden.

Figur 2 zeigt die im Zusammenhang mit Figur 1 beschriebene Verkehrssituation aus Sicht des Fahrers des Kraftfahrzeugs 10, das geblendet wird. Konkret zeigt Figur 2 die erste (beispielsweise gesetzlich vorgeschriebene) Gesamtlichtverteilung 17. Die Gesamtlichtverteilung 17 umfasst, wie oben beschrieben, die erste aus einer Vielzahl an Lichtpixel 18 gebildete Teil-Lichtverteilung 19 (hier eine Teil-Fernlichtverteilung) und eine Vorfeld-Lichtverteilung 22 (beziehungsweise eine Abblendlichtverteilung), die eine Hell-Dunkel-Grenze 23 aufweist. Die hier gezeigte Hell-Dunkel-Grenze 23 verläuft horizontal (parallel zum Horizont oder, wie Fachmann es oft nennt: hh-Linie) und weist keinen typischen Asymmetrieanstieg auf. Es versteht sich, dass die Kraftfahrzeugscheinwerfer 13 auch eine asymmetrische Hell-Dunkel-Grenze (hier nicht gezeigte) erzeugen kann.

Die erste gepixelte beziehungsweise segmentierte Teil-Lichtverteilung 19 ist vorzugsweise blendfrei. Im Zusammenhang mit der vorliegenden Erfindung wird unter dem Begriff "blendfreie Teil-Lichtverteilung" eine Teil-Lichtverteilung verstanden, die je nach Verkehrssituation dergestalt verändert werden kann, dass die anderen Verkehrsteilnehmer, beispielsweise vorausfahrende und/oder entgegenkommende Kraftfahrzeuge, ausgeblendet werden (solche Lichtverteilungen können beispielsweise mittels ADB-Kraftfahrzeugscheinwerfer erzeugt werden), aber dennoch - aus oben genannten Gründen, beispielsweise Fehlern - blenden. Zum Beispiel, falls sich das entgegenkommendes Kraftfahrzeug 11 in einen von der ersten Teil-Lichtverteilung 19 ausgeleuchteten Bereich/Gebiet hineinbewegt (siehe Figur 2) und eine Gefahr besteht, dass der Fahrer des entgegenkommenden Kraftfahrzeugs 11 geblendet wird, wird ein Teil der ersten Teil-Lichtverteilung 19 gedimmt beziehungsweise ausgeblendet, sodass ein Ausblendbereich 24 gebildet wird, welcher Ausblendbereich 24 aus einer Vielzahl gedimmter beziehungsweise ausgeblendeter Lichtpixel (beziehungsweise Lichtsegmente) 25 gebildet ist. Das Erfassen des entgegenkommenden Kraftfahrzeugs 11 erfolgt mittels des Sensorsystems 14, welches vorzugsweise in Echtzeit (in der Zeit kontinuierlich, ununterbrochen) die Umgebung des Kraftfahrzeugs 10 abtastet und Daten 16 (vorzugsweise ebenfalls in Echtzeit) an das Steuergerät 15 sendet. Das Steuergerät 15 wertet diese Daten 16 aus, errechnet beispielsweise Maße (Breite und Höhe) des (zu erzeugenden) Ausblendbereichs 24 sowie beispielsweise eine Trajektorie des Ausblendbereichs und bestimmt, wie stark die den Ausblendbereich 24 bildenden Lichtpixel 25 gedimmt oder ob diese Lichtpixel 25 ganz ausgeblendet werden sollen. Das Dimmen oder Ausblenden der Lichtpixel erfolgt üblicherweise durch Ansteuern der entsprechenden optisch relevanten Bauteile der Kraftfahrzeugscheinwerfer, beispielsweise der Leuchtmittel (insbesondere Lichtquellen) und/oder DLP-Spiegel. Die Ausblendbereiche 24 setzen sich aus gedimmten beziehungsweise ausgeblendeten Lichtpixel zusammen. Anschließend steuert das Steuergerät 15 die Kraftfahrzeugscheinwerfer 13 durch Übertragung von Daten 16 an, damit der Ausblendbereich 24 in der ersten Teil-Lichtverteilung 19 gebildet wird. Dabei ist der Ausblendbereich 24 derart ausgebildet beziehungsweise seine Maße sind so gewählt, dass das Kraftfahrzeug 11 zumindest teilweise (sodass der Fahrer des Kraftfahrzeugs 11 nicht geblendet wird), vorzugsweise ganz, in dem Ausblendbereich 24 enthalten ist (siehe Figur 2). Figur 2 zeigt einen einzigen Ausblendbereich 24. Klar ist allerdings, dass die erste vorzugsweise blendfreie Teil-Lichtverteilung 19 auch mehrere Ausblendbereiche 24 aufweisen kann, wobei jeder Ausblendbereich 24 vorzugsweise einem auszublendenden Objekt, wie beispielsweise ein entgegenkommendes oder vorausfahrendes Kraftfahrzeug, zugeordnet ist. Ausblendbereiche 24 können überlappen, wenn die auszublendenden Objekte zu nah aneinander sind und/oder überlappen.

Da die vorliegende Erfindung betreffende Verkehrssituationen dynamisch (kontinuierlich in der Zeit) ablaufen, werden die Ausblendbereiche, die entgegenkommenden Kraftfahrzeugen entsprechen, verschoben, wenn der Abstand zu den entgegenkommenden Kraftfahrzeugen kleiner wird.

An dieser Stelle sei betont, dass der Begriff "Daten" im Rahmen der vorliegenden Erfindung kontextgemäß auszulegen ist. Diese Daten können unterschiedliche Informationen enthalten. Die Art dieser Informationen ergibt sich ebenfalls aus dem Kontext, es sei denn, es wird explizit darauf hingewiesen, um welche Informationen es sich handelt. Zum Beispiel, wenn es um die Daten geht, die vom Sensorsystem 14 an das Steuergerät 15 gesendet werden, kann es um durch eine Kamera, z.B. Stereokamera, aufgenommene Bilder handeln, die durch eine entsprechende am Steuergerät 15 installierte Software ausgewertet werden können.

Wenn es um die Daten geht, die vom Steuergerät 15 an die Kraftfahrzeugscheinwerfer 13 gesendet werden, handelt es sich oft um die hinsichtlich der abgestrahlten Lichtverteilung, beispielsweise Gesamtlichtverteilung 17, relevanten Daten - Einstellungen der Lichtquellen, DLP-Spiegel und anderer optisch relevanten Bauteile der Kraftfahrzeugscheinwerfer 13.

Figur 3 zeigt schematisch Schritte eines Verfahrens, welches einer bevorzugten Ausführungsform des ersten erfindungsgemäßen Verfahrens entspricht und dazu verwendet werden kann, in der in Figuren 1 und 2 beschriebenen Verkehrssituation das blendende entgegenkommende Kraftfahrzeug 11 über die von ihm ausgehende Blendung zu verständigen.

Im Schritt 0 des Verfahrens steuert das Steuergerät 15 die Kraftfahrzeugscheinwerfer 13, um die erste vorgegebene Gesamtlichtverteilung 17 zu erzeugen. Im Schritt 1 steuert das Steuergerät das Sensorsystem 14, um die entgegenkommenden Kraftfahrzeuge 11 zu erfassen, die sich dem Kraftfahrzeug 10 nähern und das mit der ersten Teil-Lichtverteilung 19 ausgeleuchtetes Gebiet passieren. Im Schritt 2 steuert das Steuergerät 15 die Kraftfahrzeugscheinwerfer 13, um die Ausblendbereiche 24 in der ersten Teil-Lichtverteilung 19 auszubilden, welche Ausblendbereiche 24 die entgegenkommenden Kraftfahrzeuge 11 (zumindest teilweise) umfassen. Im Schritt 3 wird jedem Ausblendbereich 24 jeweils ein entgegenkommendes Kraftfahrzeug 11 zugeordnet.

Im Schritt 4 wird ein Ausblendbereich 24 gewählt. Vorzugsweise wird der Ausblendbereich gewählt, der dem nächsten entgegenkommenden Kraftfahrzeug 11 zugeordnet ist. Im Schritt 5 steuert das Steuergerät 15 das Sensorsystem 14, um diesen ausgewählten Ausblendbereich 24 nach Blendlichtquellen 26 abzutasten. Nachdem zumindest eine oder mehr Blendlichtquellen 26 erfasst werden, wird(werden) die Blendlichtquelle(n) 26 im Schritt 6 dem (ausgewählten) Ausblendbereich 24 zugeordnet. Im Schritt 7 analysiert das Steuergerät 15 die erfassten Blendlichtquelle(n) 26 hinsichtlich relevanter Parameter. Anhand dieser Analyse ermittelt das Steuergerät die relevanten Parameter. Wie oben erwähnt, können diese Parameter beispielsweise einschlägige photometrische Größen, wie Beleuchtungs- und/oder Lichtstärke, Entfernung, dreidimensionale Position der Blendlichtquelle(n) 26 bezüglich des Sensorsystems 14, d.h. im sensorsystembezogenen Koordinatensystem, sowie Trajektorie(n) der Blendlichtquelle(n) 26 in diesem sensorsystembezogenen Koordinatensystem umfassen. Anhand dieser relevanten Parameter kann das entgegenkommende Kraftfahrzeug 11 - das Empfänger-Kraftfahrzeug - die zweite Gesamtlichtverteilung 21 dergestalt korrigieren, dass der Fahrer des Kraftfahrzeugs 10 - des Sender-Kraftfahrzeugs - nicht mehr geblendet wird. Wie solche Korrektur durchgeführt wird, ist im Zusammenhang mit dem zweiten erfindungsgemäßen Verfahren erörtert.

An dieser Stelle sei angemerkt, dass anhand der photometrischen Größen der Grad einer Blendung bestimmt werden kann. Als Maß für psychologische Blendung kann beispielsweise die De-Boer-Skala herangezogen werden. Eine Zahl nach De-Boer-Skala (DIN 5340 *"Begriffe der physiologischen Optik"*) dient als Maß für Störempfindung und kann anhand der gemessenen photometrischen Größen bestimmt werden. Relevante Größen für eine physiologische Blendung sind zum Beispiel die sogenannten "Schleierleuchtdichte" und "Weber-Kontrast". Alle diese Größen hängen von den Leuchtdichtewerten der Blendquellen ab. Darüber hinaus können die Positionen der Blendlichtquellen und ihre Trajektorien im sensorsystembezogenen Koordinatensystem für die Berechnung von z.B. Schleierleuchtdichte und Blendungsempfindung nach De-Boer-Skala auch relevant sein.

Dabei ist anzumerken, dass keine aufwändige Analyse der ganzen Gesamtlichtverteilung 17 erforderlich ist, zumal Informationen zumindest hinsichtlich der Größe, der Position und der Trajektorie des Ausblendbereichs 24 im Steuergerät 15 bereits vorhanden sind. Entsprechend dieser Informationen kann das Steuergerät 15 das Sensorsystem 14, beispielsweise eine im Sensorsystem 14 vorgesehene Kamera, derart ansteuern, dass ausschließlich der Ausblendbereich 24 vom Sensorsystem 14 analysiert/abgetastet wird. Die durch Abtasten/Erfassen des Ausblendbereichs 24 entstehende Daten 16 werden zur Auswertung an das Steuergerät 15 gesendet.

Um die ermittelten relevanten Parameter der Blendlichtquelle(n) 26 zu übertragen, werden sie im Schritt 8 kodiert. Wie eine Kodierung der relevanten Parameter erfolgen kann, ist bereits oben beschrieben worden.

Im Schritt 9 steuert das Steuergerät die Kraftfahrzeugscheinwerfer 13 gemäß der Kodierung aus Schritt 8, um die relevanten Parameter in Form zumindest eines optischen, vorzugsweise gepulsten, Signals 27 zu senden, welches optische Signal 27 den Fahrer des entgegenkommenden Kraftfahrzeugs 11 zumindest nicht blendet, vorzugsweise von diesen Fahrern nicht wahrgenommen wird, wobei das optische Signal 27 mittels gedimmter Lichtpixel 25, vorzugsweise ausschließlich, des Ausblendbereichs 24 erzeugt wird, welchem Ausblendbereich 24 die Blendlichtquelle(n) 26 in Schritt 6 zugeordnet wurde(n). Wie bereits erwähnt, subsummiert der Begriff "Dimmen" in Bezug auf Lichtpixel auch vollständiges Dimmen, d.h. Ausblenden, der Lichtpixel.

Dabei können die gedimmten Lichtpixel 25 (insbesondere periodisch) aufgehellt und wieder gedimmt werden. Auf diese Weise können die optischen (insbesondere periodische) Signale 27 erzeugt werden. An dieser Stelle sei es nochmals erwähnt, dass je nachdem welche physische Größe (Lichtintensität, Dauer, Phase, Polarisation, Farbe/Wellenlänge) als Informationsträger für die relevanten Parameter verwendet wird, können die optischen Signale 27 unterschiedliche Formen annehmen. Besonders vorteilhaft ist allerdings, wenn die optischen Signale 27 derart ausgebildet sind, dass sie Menschen und ergo den Fahrer des entgegenkommenden Kraftfahrzeugs 11 nicht blenden oder von Menschen gar nicht (bewusst) wahrgenommen werden. Die optischen Signale 27 können beispielsweise in einem für Menschen unsichtbaren Spektralbereich versendet werden.

Wenn die optischen Signale 27 gepulst sind und beispielsweise die Lichtintensität als informationstragende physische Größe gewählt ist, können die optischen Signale als eine (periodische) Abfolge kurzer Lichtblitze ausgebildet sein. Dabei kann es von Vorteil sein, wenn jedes optische Signal 27 nicht länger als 20 Millisekunden dauert. In diesem Fall können die optischen Signal 27 höchstwahrscheinlich nicht bewusst wahrgenommen werden. Die gepulsten optischen Signale 27 können durch Ein- und Ausblenden beziehungsweise (weiteres) Dimmen und Aufhellen der gedimmten beziehungsweise ausgeblendeten Lichtpixel generiert werden.

Es kann darüber hinaus zweckmäßig sein, wenn die optischen Signale 27 eine vorgegebene Amplitude aufweisen, welche mit einer Detektionsschwelle von Signalempfangsmittel 30 übersteigt und somit detektiert werden können.

Wenn die optischen Signale gruppiert versendet werden, wobei jede Gruppe der optischen Signale 27 zumindest einen Teil der relevanten Parameter trägt, kann es zweckmäßig sein, dafür Sorge zu tragen, dass die einzelnen Signalgruppen voneinander (zeitlich) ausreichend abgegrenzt sind, insbesondere mit einer Periode größer als 200 Millisekunden wiederholt werden. Wenn die einzelnen Signalgruppen beziehungsweise Signale 27 weniger als 1 Millisekunde dauern, werden sie durch ihre kurze Dauer auch bei höheren Signalamplituden (höheren Werten der Leuchtstärke) nicht störend oder gar nicht wahrgenommen.

Im Schritt 10 des Verfahrens wird ein weiterer Ausblendbereich gewählt und die Schritte 5 bis 9 wiederholt.

Vorteilhaft bei einem erfindungsgemäßen Verfahren ist, dass die gedimmten Lichtpixel genau in Richtung des entgegenkommenden blendenden Kraftfahrzeugs 11 - des Empfänger-Kraftfahrzeugs - ausgerichtet sind. Daher werden die optischen Signale 27 stets an den richtigen Empfänger gesendet - in diesem Fall an das entgegenkommende blendende Kraftfahrzeug 11. Es ist daher nicht notwendig Ermittlungen bezüglich einer Richtung anzustellen, in welche die optischen Signale 27 gesendet werden. Die optischen Signale 27 werden *ab initio* an den richtigen Empfänger gesendet, ohne dass Senderichtung durch beispielsweise eine Dreh- und/oder Kippbewegung einer, beispielsweise in einem Kraftfahrzeugscheinwerfer angeordneten, Sendevorrichtung eingestellt werden müsste. Wenn beispielsweise zwei entgegenkommende Kraftfahrzeuge sehr dicht hintereinander fahren und beide blenden, kann es vorkommen, dass sich die jeweils ein entgegenkommendes Kraftfahrzeug umfassende Ausblendbereiche überlappen. In einem solchen Fall kann es zweckdienlich sein, jeweils einer Blendlichtquelle je eine Gruppe von optischen Signalen beziehungsweise je ein optisches Signal zuzuordnen und das(die) der jeweiligen Blendlichtquelle zugeordnete(n) optische(n) Signal in Richtung dieser Blendlichtquelle zu senden.

Um die Übertragungsrate zu erhöhen, können, wie Figur 2 zu entnehmen ist, mehrere gedimmten Lichtpixel 25 zum Erzeugen der optischen Signale 27 benutzt werden.

Je nach Darstellung der hinsichtlich der Blendung relevanten Informationen können sich unterschiedliche Formen der optischen Signale 27 besser oder schlechter für die Übertragung von Informationen eignen. Zum Beispiel, wenn die Informationen in einer Binärdarstellung - als eine aus Nullen und Einsen bestehende Sequenz - dargestellt werden, kann es zweckmäßig sein, diese Informationen in Form der gepulsten optischen Signale 27 zu übertragen, wobei in jedem Puls/Impuls/Lichtpuls beispielsweise genau ein Bit an Information enthalten sein kann. Die gepulsten optischen Signale 27 können durch Aufhellen und Dimmen der gedimmten Lichtpixel 25 generiert werden. Bei der in Figur 2 dargestellten bevorzugten Ausführungsform der Erfindung werden insgesamt drei Lichtpixel 25 des Ausblendbereichs 24 zum Erzeugen der gepulsten optischen Signale 27 verwendet. Wird zum Beispiel ein Lichtpixel zum Versenden eines Bits verwendet, d.h. jeder mithilfe dieses Lichtpixels erzeugte Lichtpuls entspricht einer Null beziehungsweise einer Eins, so können mit drei Lichtpixel in einem einzigen Zeitfenster bereits acht (2³) unterschiedliche binäre Sequenzen - "Wörter" - versendet werden. Ein von drei Lichtpixeln gemeinsam (im gleichen Zeitfenster) versendeter Lichtpuls kann beispielsweise eine "010"-Sequenz sein und beispielsweise zur Initialisierung einer Kommunikation vorgesehen sein.

Wie bereits erwähnt, kommen beim Kodieren der relevanten Parameter in die optischen Signale 27 mehrere aus dem Stand der Technik bekannte Verfahren in Frage. Ein Beispiel solcher Verfahren sind Modulationsverfahren. Darüber hinaus sind verschiedene Kodierungen möglich: mit einer Return-to-Zero-Kodierung (RZ-Kodierung) und insbesondere mit einer unipolaren RZ-Kodierung kann beispielsweise bei einer Kommunikation zwischen zwei Kraftfahrzeuge oder zwischen einem Kraftfahrzeug und einer Infrastruktur eine bessere Detektion an der Empfängerseite, beispielsweise an dem entgegenkommenden Kraftfahrzeug 11 - an dem Empfänger-Kraftfahrzeug, erzielt werden. Alternativ kann eine Manchester-Kodierung verwendet werden. Die hier explizit genannten Kodierungen (Kodierungsverfahren) haben die Eigenschaft, dass sie an ihren Schaltflanken und nicht an ihren Intensitätspegel detektiert werden, da bei dem Einfluss von Streulicht Pegeländerungen leichter erkennbar sind als der Pegel selbst. Hinsichtlich der Übertragung mehrerer Bits pro (Licht-)Puls/Impuls kann es vorteilhaft sein, die Pulse Position Modulation (PPM) zu verwenden. Um eine Erkennung der optischen Signale 27 an der Empfängerseite zu erleichtern, kann es vorgesehen sein, dass jedes Signal mit einer Präambel (z.B. 10101010 in Binärdarstellung) anfängt. Eine solche Präambel kann auf einem im Steuergerät vorgesehenen Speicher/Speichermedium gespeichert sein, der/das als ein Flashspeicher ausgebildet sein kann. Beispielsweise kann die Präambel bei der Kommunikation zwischen zwei Kraftfahrzeugen oder zwischen einem Kraftfahrzeug und einer Infrastruktur zur Initiierung eines Protokolls verwendet werden, bei welchem Protokoll beispielsweise Kraftfahrzeugscheinwerfer des blendenden Kraftfahrzeugs nachjustiert werden und die Blendung beseitigt wird.

Bei einer sich in der Praxis bewährten Ausführungsform der Erfindung kann jeder der Kraftfahrzeugscheinwerfer 13, 31 des Kraftfahrzeugs 10 oder des entgegenkommendes Kraftfahrzeugs 11 zwei Mikrocontroller aufweisen. Dabei können die Kraftfahrzeugscheinwerfer 13, 31 in Schritt 0 und Schritt 2 über den ersten Mikrocontroller, und in Schritt 9 über den zweiten Mikrocontroller 300 gesteuert werden. Dabei kann der erster Mikrocontroller derart ausgebildet beziehungsweise in dem Kraftfahrzeugscheinwerfer derart angeordnet sein (an die in dem Kraftfahrzeugscheinwerfer vorhandenen Leuchtmittel derart angeschlossen sein), dass über ihn ein erster Teil 28 der Lichtpixel 18 der ersten Teil-Lichtverteilung 19 gesteuert werden kann. Der zweite Mikrocontroller kann derart ausgebildet beziehungsweise in dem Kraftfahrzeugscheinwerfer derart angeordnet sein (an die in dem Kraftfahrzeugscheinwerfer vorhandene Leuchtmittel derart angeschlossen sein), dass über ihn ein zweiter Teil 29 der Lichtpixel 18 der ersten Teil-Lichtverteilung 19 gesteuert werden kann. Dabei ist es denkbar, dass kein Lichtpixel dem ersten und dem zweiten Teil gleichzeitig angehört. Der zweite Teil 29 der Lichtpixel 18 ist mit einer gestrichelten Linie in Figur 2 umrandet. Es ist zweckmäßig, wenn der zweite Teil 29 der Lichtpixel 18 den Teil der ersten Teil-Lichtverteilung 19 bildet, der am wahrscheinlichsten abgeblendet wird, wenn entgegenkommender Verkehr vorhanden ist. In diesem Fall umfasst der zweite Teil 29 den Ausblendbereich 24 - im Allgemeinen alle Ausblendbereiche - und folglich die gedimmten beziehungsweise ausgeblendeten Lichtpixel 25. Der zweite Mikrocontroller kann beispielsweise eine andere, beispielsweise höhere Taktfrequenz aufweisen und dadurch eine noch schnellere Übertragungsrate der optischen Signale 27, die mittels der gedimmten beziehungsweise ausgeblendeten Lichtpixel 25 des zweiten Teils 29 gesendet werden, ermöglichen. Der zweite Mikrocontroller 300 weist vorzugsweise eine diskrete Transistorschaltung 309 auf.

Figur 4 zeigt schematisch Schritte eines Verfahrens, welches einer bevorzugten Ausführungsform des zweiten erfindungsgemäßen Verfahrens entspricht und dazu verwendet werden kann, in der in Figuren 1 und 2 beschriebenen Verkehrssituation die von dem blendenden Kraftfahrzeug 11 (Empfänger-Kraftfahrzeug) ausgehende Blendung mithilfe des Kraftfahrzeugs 10 (Sender-Kraftfahrzeug) zu reduzieren beziehungsweise zu beseitigen, wobei das geblendete Kraftfahrzeug 10 an das blendende Kraftfahrzeug 11 zu diesem Zweck optische Signale 27 sendet. Bezogen auf Figuren 4 und 5 spielt das Sender-Kraftfahrzeug 10 die Rolle eines dem Empfänger-Kraftfahrzeug 11 entgegenkommenden Kraftfahrzeugs. Hinsichtlich der Figuren 1 bis 3 wurden die Rollen beider Kraftfahrzeuge vertauscht: das Kraftfahrzeug 10 wurde zum "entgegenkommenden Kraftfahrzeug" und das entgegenkommende Kraftfahrzeug 11 zum "Kraftfahrzeug".

Um die optischen Signale 27 zu empfangen, kann das Sensorsystem 14 Signalempfangsmittel 30 aufweisen. Diese Signalempfangsmittel 30 können beispielsweise als eine bereits im Sensorsystem 14 vorhandene (Stereo-)Kamera (siehe das Empfänger-Kraftfahrzeug 11 in der Figur 1) oder als zusätzliche Signalempfangsmittel, vorzugsweise getrennte, beispielsweise in einem der Kraftfahrzeugscheinwerfer 13 (oder in beiden Kraftfahrzeugscheinwerfern) angeordnete Photozellen und/oder Photowiderstände und/oder Photodioden ausgebildet sein (siehe das Sender-Kraftfahrzeug 10 in Figur 1). Im letzteren Fall können die Photozellen eine auf die Kraftfahrzeugbeleuchtungseinrichtung 20 des Signalempfängers (in dem Fall - des Empfänger-Kraftfahrzeugs 11) abgestimmte Elektronikschnittstelle beispielsweise als Erstausrüstung, Zusatzausstattung oder Nachrüstkomponente aufweisen. Im Allgemeinen ist es vorteilhaft, wenn die Signalempfangsmittel 30 auf die Art der optischen Signale 27 abgestimmt sind. Wie oben beschrieben, können die optischen Signale 27 unterschiedlich ausgebildet sein. Je nach physische Größe und andere Parameter der optischen Signale 27 (Lichtintensitätswerte, Dauer, Lichtwellenlänge usw.) können sich die einen oder die anderen Signalempfangsmittel 30 zum Empfangen der optischen Signale 27 eignen.

Die Schritte 00 bis 04 sind den Schritten 0 bis 4 ähnlich. Das Steuergerät 32:
steuert in Schritt 00 die Kraftfahrzeugscheinwerfer 31, um die zweite vorgegebene Gesamtlichtverteilung 21 zu erzeugen;
steuert in Schritt 01 das Sensorsystems 14, um die entgegenkommenden Kraftfahrzeuge - in dem Fall das Kraftfahrzeug 10 - zu erfassen;
steuert in Schritt 02 die Kraftfahrzeugscheinwerfer 31, um Ausblendbereiche 33 in der zweiten Teil-Lichtverteilung auszubilden, welche Ausblendbereiche 33 die entgegenkommenden Kraftfahrzeuge zumindest teilweise umfassen;
ordnet in Schritt 03 einem jeden Ausblendbereich 33 jeweils eines entgegenkommenden Kraftfahrzeugs 10 (in diesem Fall - Sender-Kraftfahrzeugs), und
wählt in Schritt 04 einen Ausblendbereich 33 aus.

Der Begriff "zumindest teilweise enthalten" ist hierbei so auszulegen, dass das entgegenkommende Kraftfahrzeug 10 nicht ganz sondern nur teilweise ausgeblendet wird - beispielsweise Fehler beim Ausblenden, welcher Umstand zu einer Blendung des Fahrers des entgegenkommenden Kraftfahrzeugs führen kann.

Nachdem ein Ausblendbereich 33 ausgewählt wurde steuert das Steuergerät 32 die Signalempfangsmittel 30 gemäß Schritt 05, um diesen ausgewählten Ausblendbereich 33 nach zumindest einem, von den entgegenkommenden Kraftfahrzeugen 10 (Sender-Kraftfahrzeug) gesendeten optischen Signal 27 abzutasten, wobei das zumindest eine optische Signal 27 hinsichtlich einer von dem Kraftfahrzeug 11 (Empfänger-Kraftfahrzeug) ausgehenden Blendung relevante Parameter enthält. Bei diesem(n) Signal(en) handelt es sich um das(die) bereits beschriebene(n) von dem entgegenkommenden Kraftfahrzeug 10 (Sender-Kraftfahrzeug) gesendete(n) Signal(e).

In Schritt 06 extrahiert (gewinnt) das Steuergerät 32 die relevanten Parameter aus dem zumindest einen empfangenen optischen Signal 27. Wie oben beschrieben, können die relevanten Parameter beispielsweise einschlägige photometrische Größen, wie Beleuchtungs- und/oder Lichtstärke, Entfernung, dreidimensionale Position der Blendlichtquelle(n) bezüglich des Sensorsystems des entgegenkommenden Kraftfahrzeugs (Sender-Kraftfahrzeugs), sowie Trajektorie(n) der Blendlichtquelle(n) enthalten. Anhand dieser Parameter kann das Steuergerät 32 bestimmen, wie die Kraftfahrzeugscheinwerfer 31 eingestellt sind, d.h. mit wie die Kraftfahrzeugscheinwerfer in Schritt 02 gesteuert wurden, und wie die Einstellungen der Kraftfahrzeugscheinwerfer 31 geändert werden können, um das Sender-Kraftfahrzeug 10 weniger oder gar nicht zu blenden.

In Schritt 07 wertet das Steuergerät 32 die relevanten Parameter aus, um Korrekturen/ Änderungen zu den Einstellungen der Kraftfahrzeugscheinwerfer 32 zu erhalten. Solche Korrekturen beziehungsweise Änderungen können Korrekturen zu den existierenden Einstellungen der Kraftfahrzeugscheinwerfer aus Schritt 02 sein. Mit diesen Korrekturen kann der Ausblendbereich 33 der zweiten Teil-Lichtverteilung und vorzugsweise die zweite Teil-Lichtverteilung selbst und/oder die zweite Gesamtlichtverteilung 21 modifiziert werden, um das Sender-Kraftfahrzeug 10 nicht mehr zu blenden.

In Schritt 08 steuert das Steuergerät 32 Kraftfahrzeugscheinwerfer 13 gemäß den in Schritt 07 ermittelten Korrekturen, um zumindest den ausgewählten Ausblendbereich 33 zu modifizieren und die Blendung des entgegenkommenden Kraftfahrzeugs 10 (des Sender-Kraftfahrzeugs) zu reduzieren und insbesondere zu beseitigen.

In Schritt 09 geht das Steuergerät 32 zum nächsten Ausblendbereich über, wobei für diesen nächsten Ausblendbereich die Schritte 05 bis 08 wiederholt werden.

Figur 5 zeigt nochmals die oben beschriebene Verkehrssituation der Figur 1 aus der Sicht des Fahrers des blendenden Kraftfahrzeugs 11 (des Empfänger-Kraftfahrzeugs). Figur 5 lässt deutlich erkennen dass der Ausblendbereich 33 der zweiten Gesamtlichtverteilung 21 zu klein ist und der Fahrer des Kraftfahrzeugs 10 geblendet wird. Wie bereits erwähnt, trägt jedes optische Signal 27 die relevanten Parameter, die zumindest hinsichtlich (vom Empfänger-Kraftfahrzeug 11 ausgehender) Blendung betreffen und anhand deren die zweite Gesamtlichtverteilung 21 derart modifiziert werden kann, dass der Fahrer des Kraftfahrzeugs 10 (Sender-Kraftfahrzeugs) nicht mehr geblendet wird. Dabei sind alle optischen Signale 27 derart ausgebildet, dass sie Menschen (und folglich von dem Fahrer des Empfänger-Kraftfahrzeugs 11) nicht blenden, vorzugsweise von Menschen nicht wahrgenommen werden.

Um die in Figur 5 gezeigte Blendung zu reduzieren oder zu beseitigen, können die Lichtpixel 34, die gleich unterhalb des Ausblendbereichs 33 der zweiten Gesamtlichtverteilung 21 liegen, ausgeblendet werden. D.h. die Lichtstärke der Lichtpixel 34 wird auf null gesenkt. Alternativ kann die zweite Gesamtlichtverteilung 21 um eine Höhe 35 gesenkt werden, die der Höhe der Lichtpixel 34 gleich ist.

Bei einer bevorzugten Ausführungsform der vorliegenden Erfindung kann es vorgesehen sein, dass sowohl das Kraftfahrzeug 10 als auch das entgegenkommende Kraftfahrzeug 11 die oben beschriebenen Mittel aufweisen, um die optischen Signale 27 zu senden und diese zu empfangen. Denkbar ist es auch, dass beide Kraftfahrzeuge 10 und 11 nicht ideale Gesamtlichtverteilungen 17, 21 erzeugen und sich gegenseitig blenden. Um die Gesamtlichtverteilungen 17, 21 zu korrigieren und dadurch die Blendung zumindest zu reduzieren, kann nach den oben beschriebenen erfindungsgemäßen Verfahren vorgegangen werden, wobei jedes Kraftfahrzeug gleichzeitig als Sender und als Empfänger fungieren kann und die optischen Signale 27 sendet und empfängt. Durch den Austausch der optischen Signale 27 zwischen den beiden Kraftfahrzeugen kann eine Kommunikation zustande kommen, infolge derer die von beiden Kraftfahrzeugen 10 und 11 abgestrahlten Gesamtlichtverteilungen 17 und 21 durch Justierung der Kraftfahrzeugscheinwerfer 13 und 31 optimiert werden können. Nachdem die Kraftfahrzeuge 10 und 11 aneinander vorbeigefahren sind, können veränderte Kraftfahrzeugscheinwerfereinstellungen, falls die Kraftfahrzeugscheinwerfereinstellungen verändert wurden, in dem Speicher des entsprechenden Steuergeräts 15, 32 gespeichert werden. Danach gibt es zumindest zwei Möglichkeiten. In einem ersten Fall, können die veränderten Einstellungen der Kraftfahrzeugscheinwerfer 13 und/oder 31 als temporäre Einstellungen verwendet werden und werden nach dem Vorbeifahren der Kraftfahrzeuge aneinander in den ursprünglichen Zustand beziehungsweise in den Werkzustand zurückgesetzt. Sollte es zu einer wiederholten Blendung kommen, können die temporären Einstellungen der Kraftfahrzeugscheinwerfer 13 und/oder 31 allerdings in permanente Einstellungen umgewandelt werden, die beim Starten des Kraftfahrzeugs angewandt werden und Lichtverteilungen (inklusive eine modifizierte Gesamtlichtverteilung) gemäß den permanenten Einstellungen erzeugen. In einem zweiten Fall können die veränderten Einstellungen der Kraftfahrzeugscheinwerfer 13 und/oder 31 übernommen werden, bis eine weitere Meldung, beispielsweise von einem anderen vorbeifahrenden Kraftfahrzeug kommt, dass die Einstellungen der Kraftfahrzeugscheinwerfer 13 und/oder 31 doch nicht ganz optimal sind.

Bei einer sich in Praxis bewährten Ausführungsform der vorliegenden Erfindung können die Kraftfahrzeugscheinwerfer 13 und/oder 31 als LED-Matrix-Kraftfahrzeugscheinwerfer - ADB-Kraftfahrzeugscheinwerfer mit beispielsweise in einer Matrix angeordneten LED-Lichtquellen - ausgebildet sein. Bei solchen Kraftfahrzeugscheinwerfern kann jedes Lichtpixel durch Steuern einer einzigen entsprechenden LED-Lichtquelle gedimmt/aufgehellt, ein- oder ausgeschaltet werden. In einem solchen LED-Matrix-Kraftfahrzeugscheinwerfer kann ein Mikrocontroller vorgesehen sein, um die LED-Lichtquellen einzeln anzusteuern. Es kann sich beispielsweise um einen TPS92661-Q1-Mikrocontroller von *"Texas Instruments"* handeln, welcher durch das Steuergerät des Kraftfahrzeugs gesteuert werden kann. Es ist allgemein bekannt, dass solche Mikrocontroller Steuern der LED-Lichtquellen in verschiedenen Modi erlauben. Beispielsweise können die Zeiten für Ein- und Ausblenden jeder einzelnen LED-Lichtquelle sowie die Frequenz, mit der jede einzelne LED-Lichtquelle ein- und ausgeschaltet wird, in einem großen Bereich programmiert werden. Mithilfe des TPS92661-Q1-Mikrocontrollers können bis zu 12 LED-Lichtquellen gleichzeitig gesteuert werden. Für weitere Details bezüglich Einstellbarkeit und Programmierbarkeit sowie seiner internen Parameter (beispielsweise Taktfrequenz oder LED-Strom) des TPS92661-Q1-Mikrocontrollers sei hier aber auf seine technische Beschreibung verwiesen.

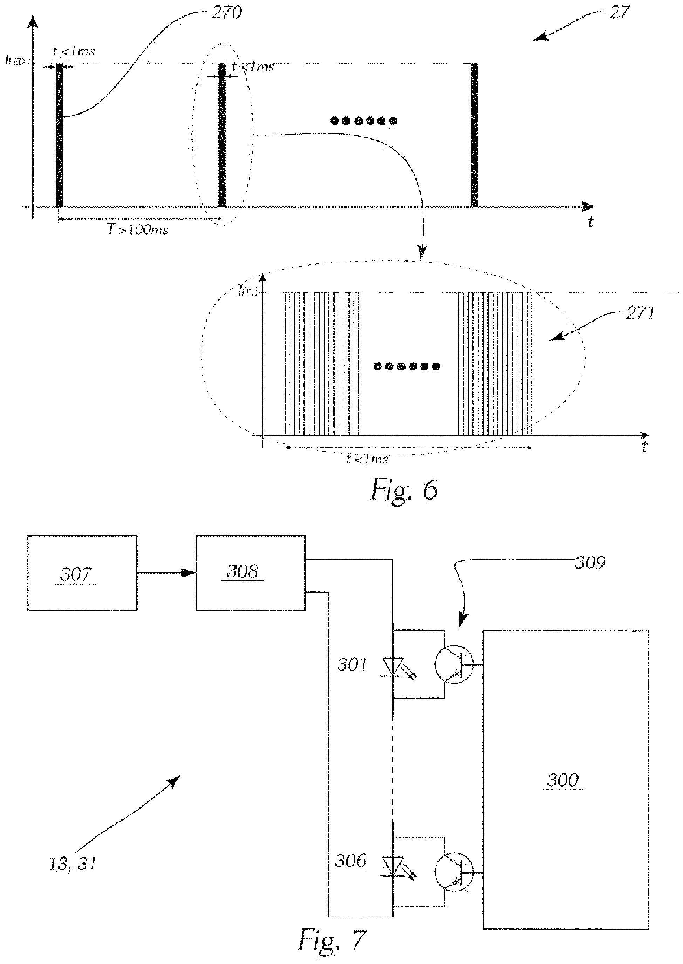

Figur 6 zeigt schematisch ein Beispiel des oben beschriebenen, mittels einer PWM erzeugten, optischen gepulsten Signals 27, welches mit Hilfe einer LED-Lichtquelle eines LED-Matrix-Kraftfahrzeugscheinwerfers erzeugt werden kann. Es versteht sich, dass das gleiche Prinzip auch bei anderen ADB-Kraftfahrzeugscheinwerfern, beispielsweise bei einem DLP-Kraftfahrzeugscheinwerfer, verwendet werden kann. Das gepulste optische Signal 27 kann dabei periodisch sein. Die einzelnen Pulse 270 können beispielsweise mit einer Periode von 100 Millisekunden wiederholt werden. Die Periode von 100 ms ist besonders bei einer Nachtfahrt vorteilhaft. Bei einer solchen Periode kann die Wahrscheinlichkeit vermindert werden, dass die optischen gepulsten Signale 27 von Menschen wahrgenommen werden. Die Pulse 270 weisen vorzugsweise gleiche Intensität *I_{LED}* und gleiche Dauer *t* auf, wobei die Dauer jeden einzelnen Pulses 270 beispielsweise weniger als eine Millisekunde betragen kann (t < 1ms). Für die Dauer eines jeden Pulses 270 kann die entsprechende LED-Lichtquelle mit einer noch höheren Frequenz ein- und ausgeschaltet werden, damit noch kürzere (bis zu wenigen Mikrosekunden, beispielsweise 4 Mikrosekunden) Pulse - Mikropulse 271 - generiert werden können. Eine in Fig. 6 dargestellte Abfolge der Mikropulse 271 kann beispielsweise einer Übertragung von eine Sequenz aus Einsen ("111 ... 1111") entsprechen.

Es versteht sich, dass zum Steuern von LED-Lichtquellen im oben genannten LED-Matrix-Kraftfahrzeugscheinwerfer und generell zum Steuern von Lichtpixel im Rahmen der vorliegenden Erfindung - also unabhängig vom Typ des erfindungsgemäßen Kraftfahrzeugscheinwerfers - auch andere Mikrocontroller oder gleichzeitig mehrere Mikrocontroller verwendet werden können.

Verwendung von zwei unterschiedlichen Mikrocontrollern kann beispielsweise dann Vorteile bringen, wenn eine höhere Schaltfrequenz der Lichtpixel, beispielsweise die Lichtpixel erzeugender LED-Lichtquellen ermöglicht werden sollte und der standardmäßige Mikrocontroller dies nicht erlauben kann. Ein solcher Fall kann beispielsweise dann auftreten, wenn die Dauer der Pulse 27, und insbesondere der Mikropulse 271, kürzer als die Zeit, die ein Pegelwechsel eines beispielsweise rechteckförmigen Pulses real benötigt, um seinen Pegel zwischen zwei definierten Zwischenwerten (üblich sind 10 % und 90 %) zu ändern. Diese Zeit ist als Anstiegszeit und Abfallzeit (engl. "rise time" und "fall time") bekannt und hängt mit der Anstiegsrate (engl. "Slew Rate") des Mikrocontrollers zusammen.

Figur 7 zeigt schematisch einen Teil eines erfindungsgemäßen Kraftfahrzeugscheinwerfers 13 oder 31, der als ein LED-Matrix-Kraftfahrzeugscheinwerfer ausgebildet ist und einen zweiten Mikrocontroller 300 aufweist. Mithilfe des zweiten Mikrocontrollers kann zumindest ein Teil der LED-Lichtquellen des Kraftfahrzeugscheinwerfers gesteuert werden. Figur 7 zeigt sechs (6) LED-Lichtquellen 301 bis 306, wobei klar ist, dass es je nach Bedarf auch mehr oder weniger LED-Lichtquellen sein können. Darüber hinaus kann zumindest ein weiterer, hier nicht gezeigter Teil der LED-Lichtquellen von dem ersten, standardmäßigen Mikrocontroller (nicht gezeigt) gesteuert werden. Die Anzahl solcher LED-Lichtquellen ist ebenfalls variabel. Es können beispielsweise eine bis zwölf LED-Lichtquellen sein, wenn der erste Mikrocontroller ein TPS92661-Q1-Mikrocontroller ist.

Mithilfe von Auf- und Abwärtsreglern 307 und 308 (engl. "Boost-" und "Buck-Converter") kann, vorzugsweise konstante, für alle LED-Lichtquellen 301 bis 306 ausreichende Spannung zur Verfügung gestellt werden. Darüber hinaus kann der zweite Mikrocontroller eine diskrete Transistorschaltung 309 umfassen, die eine höhere Schaltfrequenz der einzelnen LED-Lichtquellen 301 bis 306 ermöglicht.

Die Bezugsziffern in den Ansprüchen und in der Beschreibung dienen lediglich zu einem besseren Verständnis der vorliegenden Anmeldung und sollen auf gar keinen Fall als eine Beschränkung des Gegenstands der vorliegenden Erfindung angesehen werden.

Wie bereits erwähnt sind die Begriffe Sender- und Empfänger-Kraftfahrzeug nicht als einschränkend auszulegen. Im Rahmen der vorliegenden Erfindung können beide Kraftfahrzeuge sowohl als Sender als auch als Empfänger fungieren. Dies ist insbesondere der Fall, wenn die oben beschriebene Kommunikation beider Kraftfahrzeuge zwecks Nachjustierung ihrer Kraftfahrzeugscheinwerfer stattfindet. Darüber hinaus ist die Erfindung nicht auf sich bewegende Kraftfahrzeuge beschränkt. Zumindest eines der Kraftfahrzeuge (Sender- oder Empfänger-Kraftfahrzeug) kann auch beispielsweise an einem Straßenrand stehen.

## Patentansprüche

1. Von einem Steuergerät (15) ausführbares Verfahren zum Steuern einer Kraftfahrzeugbeleuchtungseinrichtung (12), welche zumindest einen Kraftfahrzeugscheinwerfer (13) und zumindest ein Sensorsystem (14) umfasst, wobei
* der zumindest eine Kraftfahrzeugscheinwerfer (13) dazu eingerichtet ist, eine vorgegebene erste Gesamtlichtverteilung (17) zu erzeugen, welche zumindest eine erste vorgegebene, aus einer Vielzahl an Lichtpixeln (18) gebildete Teil-Lichtverteilung (19) umfasst, wobei die Lichtstärke eines jeden Lichtpixels (18) einzeln mittels des Steuergeräts (15) steuerbar ist, und
* das zumindest eine Sensorsystem (14) dazu eingerichtet ist, zumindest entgegenkommende Kraftfahrzeuge (11) zu erfassen, wobei das Verfahren folgende Schritte aufweist:
Schritt 0: Steuern des zumindest einen Kraftfahrzeugscheinwerfers (13), um die erste vorgegebene Gesamtlichtverteilung (17) zu erzeugen;
Schritt 1: Steuern des Sensorsystems (14), um die entgegenkommenden Kraftfahrzeuge (11) zu erfassen;
Schritt 2: Steuern des zumindest einen Kraftfahrzeugscheinwerfers (13), um einen oder mehrere Ausblendbereiche (24) in der ersten Teil-Lichtverteilung (19) auszubilden, welche Ausblendbereiche (24) die entgegenkommenden Kraftfahrzeuge (11) umfassen;
Schritt 3: Zuordnen eines jeden Ausblendbereiches (24) jeweils einem entgegenkommenden Kraftfahrzeug (11),
**gekennzeichnet durch**
Schritt 4: Auswählen eines Ausblendbereichs (24);
Schritt 5: Steuern des Sensorsystems (14), um diesen Ausblendbereich (24) nach Blendlichtquellen (26) abzutasten;
Schritt 6: Zuordnen der erfassten Blendlichtquelle(n) (26) zu diesem Ausblendbereich (24);
Schritt 7: Analysieren der erfassten Blendlichtquelle(n) (26) hinsichtlich Parameter, wobei die Parameter hinsichtlich einer von dem entgegenkommenden Kraftfahrzeug (11) ausgehenden Blendung relevant sind, um diese relevanten Parameter zu ermitteln;
Schritt 8: Kodieren der relevanten Parameter der Blendlichtquelle(n) (26);
Schritt 9: Steuern des zumindest einen Kraftfahrzeugscheinwerfers (13) gemäß der Kodierung aus Schritt 8, um die relevanten Parameter in Form zumindest eines optischen Signals (27) zu senden, welches optische Signal (27) die Fahrer der entgegenkommenden Kraftfahrzeuge (11) zumindest nicht blendet, wobei das optische Signal (27) mittels zumindest eines gedimmten Lichtpixels (25) des Ausblendbereichs (24) erzeugt wird, welchem Ausblendbereich (24) die Blendlichtquelle(n) (26) in Schritt 6 zugeordnet wurde(n);
Schritt 10: Auswählen eines nächsten Ausblendbereichs und Wiederholen der Schritte 5 bis 9.

2. Verfahren nach Anspruch 1, **gekennzeichnet durch** die Verwendung eines Kraftfahrzeugscheinwerfers (13), welcher zumindest einen ersten und einen zweiten Mikrocontroller umfasst, wobei der zweite Mikrocontroller (300) vorzugsweise eine diskrete Transistorschaltung (309) umfasst, wobei der Kraftfahrzeugscheinwerfer (13) in Schritt 0 und Schritt 2 über den ersten Mikrocontroller gesteuert wird, und in Schritt 9 über den zweiten Mikrocontroller (300) gesteuert wird.

3. Verfahren nach Anspruch 1 oder 2, **dadurch gekennzeichnet, dass** das optische Signal (27) durch abwechselndes Dimmen und Aufhellen des zumindest einen gedimmten Lichtpixels (25) erzeugt wird.

4. Verfahren nach Anspruch 3, **dadurch gekennzeichnet, dass** das zumindest eine gedimmte Lichtpixel (25) nach dem Aufhellen eine geringere Lichtstärke aufweist als nicht gedimmte Lichtpixel (18).

5. Verfahren nach Anspruch 3 oder 4, **dadurch gekennzeichnet, dass** das optische Signal (27) durch abwechselndes Dimmen und Aufhellen der mehreren gedimmten Lichtpixel (25), beispielsweise von allen gedimmten Lichtpixeln (25) erzeugt wird, wobei die mehreren gedimmten Lichtpixel (25) in einer Reihe oder matrixartig angeordnet sind.

6. Verfahren nach einem der Ansprüche 1 bis 5, **dadurch gekennzeichnet, dass** das optische Signal (27) als ein, vorzugsweise mit einer vorgegebenen Periode, gepulstes Signal ausgebildet ist, wobei vorzugsweise das optische gepulste Signal (27) zumindest einen, insbesondere mehrere, Impulse/Pulse (271) umfasst, wobei vorzugsweise jeder Impuls/Puls (271) einer logischen Eins oder einer logischen Null entspricht.

7. Von einem Steuergerät (32) ausführbares Verfahren zum Steuern einer Kraftfahrzeugbeleuchtungseinrichtung (20), welche zumindest einen Kraftfahrzeugscheinwerfer (31), und zumindest ein Sensorsystem (14) umfasst, wobei
* der zumindest eine Kraftfahrzeugscheinwerfer (31) dazu eingerichtet ist, eine vorgegebene zweite Gesamtlichtverteilung (21) zu erzeugen, welche zumindest eine zweite vorgegebene, aus einer Vielzahl an Lichtpixel gebildete Teil-Lichtverteilung umfasst, wobei die Lichtstärke eines jeden Lichtpixels einzeln mittels des Steuergeräts (32) steuerbar ist, und
* das zumindest eine Sensorsystem (14) dazu eingerichtet ist, zumindest entgegenkommende Kraftfahrzeuge (10) zu erfassen, welches Verfahren folgende Schritte aufweist:
Schritt 00: Steuern des zumindest einen Kraftfahrzeugscheinwerfers (31), um die zweite vorgegebene Gesamtlichtverteilung (21) zu erzeugen;
Schritt 01: Steuern des Sensorsystems (14), um die entgegenkommenden Kraftfahrzeuge (10) zu erfassen;
Schritt 02: Steuern des zumindest einen Kraftfahrzeugscheinwerfers (31), um Ausblendbereiche (33) in der zweiten Teil-Lichtverteilung auszubilden, welche Ausblendbereiche (33) die entgegenkommenden Kraftfahrzeuge (10) zumindest teilweise umfassen;
Schritt 03: Zuordnen einem jeden Ausblendbereich (33) jeweils eines entgegenkommenden Kraftfahrzeugs (10);
**dadurch gekennzeichnet, dass**
* das Sensorsystem (14) Signalempfangsmittel (30) umfasst, und das Verfahren ferner folgende Schritte aufweist:
Schritt 04: Auswählen eines Ausblendbereichs (33);
Schritt 05: Steuern der Signalempfangsmittel (30), um diesen ausgewählten Ausblendbereich (33) nach zumindest einem, von den entgegenkommenden Kraftfahrzeugen (10) gesendeten optischen Signal (27) abzutasten, wobei das zumindest eine optische Signal (27) hinsichtlich einer von dem Kraftfahrzeug (11) ausgehenden Blendung relevante Parameter enthält;
Schritt 06: Extrahieren der relevanten Parameter aus dem zumindest einen optischen Signal (27);
Schritt 07: Auswerten der relevanten Parameter, um Korrekturen zu Einstellungen zu erhalten, mit welchen Einstellungen der zumindest eine Kraftfahrzeugscheinwerfer (31) zum Ausbilden des ausgewählten Ausblendbereichs (33) in Schritt 02 gesteuert wurde;
Schritt 08: Steuern des zumindest einen Kraftfahrzeugscheinwerfers (13) gemäß den Korrekturen, um den ausgewählten Ausblendbereich (33) zu modifizieren und die Blendung des entgegenkommenden Kraftfahrzeugs (10) zu reduzieren;
Schritt 09: Auswählen eines nächsten Ausblendbereichs und Wiederholen der Schritte 05 bis 08.

8. Verfahren nach Anspruch 7, **dadurch gekennzeichnet, dass** die Signalempfangsmittel (30) in dem zumindest einen Kraftfahrzeugscheinwerfer (13, 31) angeordnet sind und vorzugsweise als Photodioden und/oder Photozellen und/oder Photowiderstände ausgebildet sind.

9. Computerprogramm umfassend Befehle, die bei der Ausführung des Computerprogramms durch ein Steuergerät (15, 32) eines Kraftfahrzeugs (10,11) dieses Steuergerät (15, 32) veranlassen, die Schritte des Verfahrens nach einem der Ansprüche 1 bis 6 und/oder nach Anspruch 7 oder 8 auszuführen.

10. Speichermedium für ein Steuergerät (15, 32) eines Kraftfahrzeugs (10,11) mit zumindest einem Computerprogramm nach Anspruch 9.

11. Steuergerät für ein Kraftfahrzeug umfassend ein Speichermedium nach Anspruch 10.

12. Kraftfahrzeug mit mindestens einem Steuergerät nach Anspruch 11.

13. Kraftfahrzeug-Kommunikationssystem zum Kommunizieren mit zumindest entgegenkommenden Kraftfahrzeugen (10,11) mittels Sendens und Empfangens optischer Signale (27) umfassend ein Steuergerät (15, 32), zwei Kraftfahrzeugscheinwerfer (13, 31) und ein Sensorsystem (14), wobei
- das Steuergerät (15, 32) ein Speichermedium mit zumindest einem Computerprogramm umfasst, welches Computerprogramm Befehle umfasst, die bei der Ausführung des Computerprogramms durch das Steuergerät dieses Steuergerät (15, 32) veranlassen, die Schritte des Verfahrens nach einem der Ansprüche 1 bis 6 und/oder des Verfahrens nach Anspruch 7 oder 8 auszuführen,
- die Kraftfahrzeugscheinwerfer (13, 31) dazu eingerichtet sind, eine vorgegebene Gesamtlichtverteilung (17, 21) zu erzeugen, welche zumindest eine vorgegebene, aus einer Vielzahl an Lichtpixel gebildete Teil-Lichtverteilung umfasst, wobei die Lichtstärke eines jeden Lichtpixels einzeln mittels des Steuergeräts (15, 32) steuerbar ist,
- das Sensorsystem (14) dazu eingerichtet ist, zumindest entgegenkommende Kraftfahrzeuge (11, 10) zu erfassen, und Signalempfangsmittel (30) umfasst, welche Signalempfangsmittel (30) dazu eingerichtet sind, die zumindest von den entgegenkommenden Kraftfahrzeugen (11, 10) gesendeten, optischen, beispielsweise gepulsten, Signale (27) zu empfangen, welche Signale (27) Menschen nicht blenden, und vorzugsweise für Menschen nicht wahrnehmbar sind, und welche Signalempfangsmittel (30) an das Steuergerät (15, 32), zumindest zum Übertragen der empfangenen optischen Signale (27), anschließbar sind und vorzugsweise in zumindest einem der beiden Kraftfahrzeugscheinwerfer (31, 13) angeordnet sind.

## Claims

1. Method executable by a control device (15) for controlling a motor vehicle lighting device (12), which comprises at least one motor vehicle headlamp (13) and at least one sensor system (14), wherein
* the at least one motor vehicle headlamp (13) is configured to generate a predetermined first total light distribution (17) which comprises at least a first predetermined partial light distribution (19) composed of a plurality of light pixels (18), the control device (15) allowing to control the light intensity of each light pixel (18) individually, and
* the at least one sensor system (14) is configured to detect at least oncoming motor vehicles (11), the method comprising the following steps:
Step 0: controlling the at least one motor vehicle headlamp (13) to produce the first predetermined total light distribution (17);
Step 1: controlling the sensor system (14) to detect the oncoming motor vehicles (11);
Step 2: controlling the at least one motor vehicle headlight (13) to form one or more blanking areas (24) in the first partial light distribution (19), which blanking areas (24) include the oncoming motor vehicles (11);
Step 3: assigning each blanking area (24) to a respective oncoming motor vehicle (11);
**characterised by**
Step 4: selecting a blanking area (24);
Step 5: controlling the sensor system (14) to scan said blanking area (24) for glare sources (26);
Step 6: assigning the detected glare source(s) (26) to this blanking area (24);
Step 7: analyzing the detected glare light source(s) (26) with respect to parameters, which parameters are relevant with respect to a glare originating from the oncoming motor vehicle (11), in order to determine these relevant parameters;
Step 8: coding the relevant parameters of the glare light source(s) (26);
Step 9: controlling the at least one motor vehicle headlamp (13) according to the coding of step 8 in order to transmit the relevant parameters in the form of at least one optical signal (27), which optical signal (27) at least does not glare the drivers of the oncoming motor vehicles (11), the optical signal (27) being generated by means of at least one dimmed light pixel (25) of the blanking area (24) to which blanking area (24) the glare source(s) (26) was/are assigned in step 6;
Step 10: selecting a next blanking area and repeating steps 5 to 9.

2. Method according to claim 1, **characterised by** using a motor vehicle headlamp (13) comprising at least a first and a second microcontrollers, said second microcontroller (300) preferably comprising a discrete transistor circuit (309), wherein said motor vehicle headlamp (13) is controlled via said first microcontroller in step 0 and step 2, and is controlled via said second microcontroller (300) in step 9.

3. Method according to claim 1 or 2, **characterised in that** the optical signal (27) is generated by alternately dimming and brightening the at least one dimmed light pixel (25).

4. Method according to claim 3, **characterised in that** the at least one dimmed light pixel (25) has a lower luminous intensity after brightening than non-dimmed light pixels (18).

5. Method according to claim 3 or 4, **characterised in that** the optical signal (27) is generated by alternately dimming and brightening the several dimmed light pixels (25), for example of all dimmed light pixels (25), wherein the several dimmed light pixels (25) are arranged in a row or matrix-like arrangement.

6. Method according to any one of claims 1 to 5, **characterised in that** the optical signal (27) is realised as a pulsed signal, preferably with a predetermined period, the optical pulsed signal (27) preferably comprising at least one, in particular several, pulses/pulses (271), wherein preferably each pulse/pulse (271) corresponds to a logic one or a logic zero.

7. Method executable by a control device (32) for controlling a motor vehicle lighting device (20) which comprises at least one motor vehicle headlamp (31) and at least one sensor system (14), wherein
* the at least one motor vehicle headlamp (31) is configured to generate a predetermined second total light distribution (21) which comprises at least a second predetermined partial light distribution composed of a plurality of light pixels, the control device (32) allowing to control the light intensity of each light pixel individually, and
* the at least one sensor system (14) is configured to detect at least oncoming motor vehicles (10), the method comprising the following steps:
Step 00: controlling the at least one motor vehicle headlamp (31) to produce the second predetermined total light distribution (21);
Step 01: controlling the sensor system (14) to detect the oncoming motor vehicles (10);
Step 02: controlling the at least one motor vehicle headlight (31) to form blanking areas (33) in the second partial light distribution, which blanking areas (33) at least partially include the oncoming motor vehicles (10);
Step 03: assigning to each blanking area (33) a respective oncoming motor vehicle (10);
**characterised in that**
* the sensor system (14) comprises signal receiving means (30), and the method further comprises the following steps:
Step 04: selecting a blanking area (33);
Step 05: controlling said signal receiving means (30) to scan said selected blanking area (33) for at least one optical signal (27) transmitted by said oncoming motor vehicles (10), said at least one optical signal (27) containing relevant parameters with respect to a glare emitted by said motor vehicle (11);
Step 06: extracting the relevant parameters from the at least one optical signal (27);
Step 07: evaluating the relevant parameters to obtain corrections to settings, with which the at least one motor vehicle headlamp (31) was controlled to form the selected blanking area (33) in step 02;
Step 08: controlling the at least one motor vehicle headlight (13) in accordance with the corrections to modify the selected blanking area (33) to reduce the glare of the oncoming motor vehicle (10);
Step 09: selecting a next blanking area and repeating steps 05 to 08.

8. Method according to claim 7, **characterised in that** the signal receiving means (30) are located in the at least one motor vehicle headlamp (13, 31) and are preferably realised as photodiodes and/or photocells and/or photoresistors.

9. Computer program including instructions which, during execution of the computer program by a control device (15, 32) of a motor vehicle (10, 11), cause said control device (15, 32) to execute the steps of the method according to any one of claims 1 to 6 and/or according to claim 7 or 8.

10. Storage medium for a control device (15, 32) of a motor vehicle (10, 11), comprising at least one computer program according to claim 9.

11. Control device for a motor vehicle comprising a storage medium according to claim 10.

12. Motor vehicle comprising at least one control device according to claim 11.

13. Motor vehicle communication system for communicating with at least oncoming motor vehicles (10, 11) by means of transmitting and receiving optical signals (27), comprising a control device (15, 32), two motor vehicle headlights (13, 31) and a sensor system (14),
the control device (15, 32) comprising a storage medium with at least one computer program, which computer program comprises instructions which, during execution of the computer program by the control device, cause said control device (15, 32) to execute the steps of the method according to one of claims 1 to 6 and/or the method according to claim 7 or 8,
the motor vehicle headlights (13, 31) being configured to generate a predetermined total light distribution (17,21) which comprises at least one predetermined partial light distribution composed of a plurality of light pixels, wherein the control device (15, 32) allows to control the light intensity of each light pixel individually,
the sensor system (14) is configured to detect at least oncoming motor vehicles (11, 10), and comprises signal receiving means (30), which signal receiving means (30) are configured to receive optical, for example pulsed, signals (27) transmitted from at least the oncoming motor vehicles (11, 10), which signals (27) do not glare persons and preferably are not perceptible to persons, and which signal receiving means (30) can be connected to the control device (15, 32) at least for transmitting the received optical signals (27) and preferably are located in at least one of the two motor vehicle headlights (31, 13).

## Revendications

1. Procédé exécutable par une unité de commande (15) pour commander un dispositif d'éclairage de véhicule automobile (12), comportant au moins un phare de véhicule automobile (13) et au moins un système de capteurs (14), dans lequel
* ledit au moins un phare de véhicule automobile (13) est configuré pour générer une première répartition lumineuse globale prédéfinie (17) qui comprend au moins une première répartition lumineuse partielle prédéfinie (19) formée d'une pluralité de pixels lumineux (18), l'intensité lumineuse de chaque pixel lumineux (18) pouvant être commandée individuellement au moyen du dispositif de commande (15), et
* ledit au moins un système de capteur (14) est agencé pour détecter au moins les véhicules à moteur venant en sens inverse (11),
le procédé comprenant les étapes suivantes :
Étape 0 : commander ledit au moins un phare de véhicule à moteur (13) pour générer la première répartition lumineuse globale prédéfinie (17) ;
Étape 1 : commander le système de capteurs (14) pour détecter les véhicules à moteur venant en sens inverse (11) ;
Étape 2 : commander ledit au moins un phare de véhicule automobile (13) pour former une ou plusieurs zones d'occultation (24) dans la première répartition lumineuse partielle (19), lesquelles zones d'occultation (24) comprennent les véhicules automobiles venant en sens inverse (11) ;
Étape 3 : attribuer chaque zone de suppression (24) à un véhicule à moteur en sens inverse (11) respectif,
**caractérisé par**
Étape 4 : sélectionner une zone d'occultation (24) ;
Étape 5 : commander le système de capteurs (14) pour balayer ladite zone d'occultation (24) à la recherche de sources d'éblouissement (26);
Étape 6 : associer la ou les source(s) d'éblouissement détectées (26) à ladite zone d'occultation (24) ;
Étape 7 : analyser la ou les source(s) de lumière éblouissante détectées (26) par rapport à des paramètres, les paramètres étant pertinents par rapport à un éblouissement émanant du véhicule à moteur en sens inverse (11), afin de déterminer ces paramètres pertinents ;
Étape 8 : coder les paramètres pertinents de la ou des sources d'éblouissement (26) ;
Étape 9 : commander ledit au moins un phare de véhicule automobile (13) selon le codage de l'étape 8 afin de transmettre les paramètres pertinents sous la forme d'au moins un signal optique (27), lequel signal optique (27) au moins n'éblouit pas les conducteurs des véhicules automobiles (11) venant en sens inverse, le signal optique (27) étant généré au moyen d'au moins un pixel lumineux atténué (25) de la zone d'éblouissement (24) à laquelle la ou les sources d'éblouissement (26) ont été attribuées à l'étape 6 ;
Étape 10 : sélection d'une zone de suppression suivante et répétition des étapes 5 à 9.

2. Procédé selon la revendication 1, **caractérisé par** l'utilisation d'un phare de véhicule à moteur (13), qui comporte au moins un premier et un second microcontrôleurs, ledit second microcontrôleur (300) comportant de préférence un circuit à transistor discret (309), ledit phare de véhicule à moteur (13) étant commandé via ledit premier microcontrôleur à l'étape 0 et à l'étape 2, et est commandé via ledit second microcontrôleur (300) à l'étape 9.

3. Procédé selon la revendication 1 ou 2, **caractérisé en ce que** le signal optique (27) est généré par la gradation et l'éclaircissement alternés du au moins un pixel lumineux gradé (25).

4. Procédé selon la revendication 3, **caractérisé en ce que** ledit au moins un pixel lumineux atténué (25) a une intensité lumineuse plus faible après éclaircissement que les pixels lumineux non atténués (18).

5. Procédé selon la revendication 3 ou 4, **caractérisé en ce que** le signal optique (27) est généré en atténuant et en éclaircissant alternativement les plusieurs pixels de lumière atténuée (25), par exemple tous les pixels de lumière atténuée (25), lesdits plusieurs pixels de lumière atténuée (25) étant disposés en rangée ou en matrice.

6. Procédé selon l'une quelconque des revendications 1 à 5, **caractérisé en ce que** le signal optique (27) est formé comme un signal pulsé, de préférence avec une période prédéfinie, de préférence le signal optique pulsé (27) comportant au moins une impulsion/pulsation, en particulier une pluralité d'impulsions/pulsations (271), de préférence chaque impulsion/pulsation (271) correspondant à un UN logique ou à un ZERO logique.

7. Procédé exécutable par une unité de commande (32) pour commander un dispositif d'éclairage de véhicule automobile (20), comportant au moins un phare de véhicule automobile (31) et au moins un système de capteurs (14), dans lequel
* ledit au moins un phare de véhicule automobile (31) est configuré pour générer une deuxième répartition lumineuse globale prédéfinie (21) qui comprend au moins une deuxième répartition lumineuse partielle prédéfinie formée d'une pluralité de pixels lumineux, l'intensité lumineuse de chaque pixel lumineux pouvant être commandée individuellement au moyen du dispositif de commande (32), et
* ledit au moins un système de capteurs (14) est agencé pour détecter au moins les véhicules à moteur venant en sens inverse (10),
le procédé comprenant les étapes suivantes :
Étape 00 : commander ledit au moins un phare de véhicule à moteur (31) pour générer la deuxième répartition lumineuse globale prédéfinie (21) ;
Étape 01 : commander le système de capteurs (14) pour détecter les véhicules à moteur venant en sens inverse (10) ;
Étape 02 : commander ledit au moins un phare de véhicule automobile (31) pour former des zones d'occultation (33) dans la deuxième répartition lumineuse partielle, lesquelles zones d'occultation (33) comprennent au moins partiellement les véhicules automobiles venant en sens inverse (10) ;
Étape 03 : attribuer, à chaque zone de suppression (33), un véhicule automobile en sens inverse (10) respectif ;
**caractérisé en ce que**
* le système de capteurs (14) comprend des moyens de réception de signaux (30), et le procédé en outre comporte les étapes suivantes :
Étape 04 : sélectionner une zone d'occultation (33) ;
Étape 05 : commander les moyens de réception de signal (30) pour balayer ladite zone de suppression sélectionnée (33) pour au moins un signal optique (27) transmis par les véhicules à moteur venant en sens inverse (10), ledit au moins un signal optique (27) contenant des paramètres pertinents concernant un éblouissement émis par ledit véhicule à moteur (11);
Étape 06 : extraire les paramètres pertinents à partir de ledit au moins un signal optique (27) ;
Étape 07 : évaluer lesdits paramètres pertinents pour obtenir des corrections aux réglages avec lesquels ledit au moins un phare de véhicule à moteur (31) a été commandé pour former ladite zone d'éblouissement sélectionnée (33) à l'étape 02 ;
Étape 08 : commander ledit au moins un phare de véhicule à moteur (13) en fonction des corrections pour modifier la zone de coupure sélectionnée (33) afin de réduire l'éblouissement du véhicule à moteur venant en sens inverse (10) ;
Étape 09 : sélectionner une zone de suppression suivante et répétition des étapes 05 à 08.

8. Procédé selon la revendication 7, **caractérisé en ce que** les moyens de réception de signaux (30) sont disposés dans ledit au moins un phare de véhicule automobile (13, 31) et sont de préférence conçus comme des photodiodes et/ou des cellules photoélectriques et/ou des photorésistances.

9. Programme d'ordinateur comprenant des instructions qui, lorsque le programme d'ordinateur est exécuté par une unité de commande (15, 32) d'un véhicule automobile (10, 11), amènent cette unité de commande (15, 32) à exécuter les étapes du procédé selon l'une quelconque des revendications 1 à 6 et/ou selon la revendication 7 ou 8.

10. Support de mémoire pour une unité de commande (15, 32) d'un véhicule automobile (10, 11) comprenant au moins un programme informatique selon la revendication 9.

11. Unité de commande d'un véhicule automobile comprenant un support de mémoire selon la revendication 10.

12. Véhicule automobile comportant au moins une unité de commande selon la revendication 11.

13. Système de communication pour véhicule automobile destiné à communiquer avec au moins des véhicules automobiles venant en sens inverse (10, 11) par l'émission et la réception de signaux optiques (27), comportant une unité de commande (15, 32), deux phares de véhicule automobile (13, 31) et un système de capteurs (14),
l'unité de commande (15, 32) comportant un support de mémoire avec au moins un programme informatique, lequel programme informatique comprend des instructions qui, lorsque l'unité de commande exécute le programme d'ordinateur, amènent ladite unité de commande (15, 32) à exécuter les étapes du procédé selon l'une quelconque des revendications 1 à 6 et/ou du procédé selon la revendication 7 ou 8,
les phares du véhicule automobile (13, 31) étant agencés pour générer une répartition lumineuse globale prédéfinie (17, 21) qui comprend au moins une répartition lumineuse partielle prédéfinie formée d'une pluralité de pixels lumineux, l'intensité lumineuse de chaque pixel lumineux pouvant être commandée individuellement au moyen du dispositif de commande (15, 32),
le système de capteur (14) étant agencé pour détecter au moins les véhicules à moteur en sens inverse (11, 10), et comportant des moyens de réception de signaux (30), lesquels moyens de réception de signaux (30) sont agencés pour recevoir les signaux optiques (27), par exemple puisés, transmis au moins par les véhicules à moteur en sens inverse (11, 10), lesquels signaux (27) n'éblouissent pas les personnes et de préférence sont imperceptibles par les personnes, et lesquels moyens de réception de signaux (30) peuvent être reliés à l'unité de commande (15, 32), au moins pour transmettre les signaux optiques reçus (27), et sont de préférence disposés dans au moins un des deux phares de véhicule automobile (31, 13).
